(19) **Europäisches Patentamt / European Patent Office / Office européen des brevets**

(11) **EP 3 892 837 B1**

(12) **EUROPEAN PATENT SPECIFICATION**

(45) Date of publication and mention
of the grant of the patent:
**20.03.2024   Bulletin 2024/12**

(21) Application number: **19893205.5**

(22) Date of filing: **09.10.2019**

(51) International Patent Classification (IPC):
*F01N 3/08* (2006.01)       *B01D 53/92* (2006.01)
*B01D 53/94* (2006.01)       *B01J 29/78* (2006.01)
*B01J 35/04* (2006.01)       *F01N 3/035* (2006.01)
*F01N 3/10* (2006.01)       *F01N 3/24* (2006.01)
*F01N 3/28* (2006.01)       *F01N 13/16* (2010.01)

(52) Cooperative Patent Classification (CPC):
**B01D 53/9477; B01D 53/9418; F01N 3/10;
F01N 3/103; F01N 3/2066; F01N 3/24; F01N 3/28;
F01N 13/009; F01N 13/16;** B01D 2251/2062;
B01D 2251/2067; B01D 2255/20738;
B01D 2255/20761; B01D 2255/20776;
B01D 2255/407;                          (Cont.)

(86) International application number:
**PCT/JP2019/039791**

(87) International publication number:
**WO 2020/116020 (11.06.2020 Gazette 2020/24)**

(54) **EXHAUST GAS PURGING DEVICE**

ABGASSPÜLVORRICHTUNG

DISPOSITIF DE PURGE DE GAZ D'ÉCHAPPEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.12.2018   JP 2018229105**

(43) Date of publication of application:
**13.10.2021   Bulletin 2021/41**

(73) Proprietor: **N.E. Chemcat Corporation
Tokyo 105-6124 (JP)**

(72) Inventors:
 • **MATSUNAMI, Yukihiko
   Tokyo 105-6124 (JP)**
 • **KAYADA, Yuto
   Tokyo 105-6124 (JP)**
 • **ANDO, Ryuji
   Tokyo 105-6124 (JP)**

(74) Representative: **Müller-Boré & Partner
Patentanwälte PartG mbB
Friedenheimer Brücke 21
80639 München (DE)**

(56) References cited:
**JP-A- 2012 062 818     JP-A- 2012 062 818
JP-A- 2012 067 667     JP-A- 2017 227 181
JP-A- 2017 227 181**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
B01D 2255/50; B01D 2255/9032; B01D 2255/91;
B01D 2255/911; B01D 2257/404; B01D 2257/406;
F01N 2330/00; F01N 2370/02; F01N 2510/063;
F01N 2510/068; F01N 2510/0684; F01N 2610/02;
F01N 2900/08; Y02T 10/12

(52) Cooperative Patent Classification (CPC): (Cont.)
B01D 2255/50; B01D 2255/9032; B01D 2255/91;
B01D 2255/911; B01D 2257/404; B01D 2257/406;
F01N 2330/00; F01N 2370/02; F01N 2510/063;
F01N 2510/068; F01N 2510/0684; F01N 2610/02;
F01N 2900/08; Y02T 10/12

**Description**

[Technical Field]

The present invention relates to an exhaust gas purification apparatus for purifying an exhaust gas discharged from a lean combustion engine.

[Background Art]

Regarding techniques for purifying an exhaust gas generated from an internal-combustion engine such as a lean combustion engine, many proposals have been heretofore made. For example, exhaust gas purification apparatuses are widely known in which a diesel oxidation catalyst (DOC) for purifying harmful components in the exhaust gas, such as carbon monoxide (CO), hydrogen carbide (HC) and nitrogen oxide (NOx), a diesel particulate filter (DPF) for collecting particulate matters (PMs) contained in the exhaust gas, such as soot, and the like are arranged in an exhaust gas flow channel. Further, in recent years, a catalyst-coated DPF in which a catalyst layer is provided by coating a DPF with a catalyst slurry and firing the catalyst slurry for suppressing discharge of particulate matters and removing CO/HC/NO$_x$ etc. at the same time, and the like have been proposed from the viewpoint of saving the mounting space, etc.

A urea SCR (selective catalytic reduction) system has been developed as a catalyst which performs purification by selectively reducing nitrogen oxide (NO$_x$) contained in an exhaust gas generated from a lean combustion engine. In the urea SCR system, a SCR catalyst which adsorbs ammonia generated by hydrolysis of urea is employed, and NO$_x$ is chemically reacted with ammonia on the SCR catalyst to purify NO$_x$ to nitrogen and water. In the urea SCR catalyst, NO$_x$ is ultimately reduced to N$_2$ mainly in accordance with the reaction formulae [1] to [3] shown below.

$$4NO + 4NH_3 + O_2 \rightarrow 4N_2 + 6H_2O \,... \qquad (1)$$

$$6NO_2 + 8NH_3 \rightarrow 7N_2 + 12H_2O \,... \qquad (2)$$

$$NO + NO_2 + 2NH_3 \rightarrow 2N_2 + 3H_2O \,... \qquad (3)$$

As such a SCR catalyst, transition metal ion-exchange zeolite having a transition metal such as copper (Cu) or iron (Fe) supported on zeolite (transition metal element-supported zeolite) is widely used (see Patent Literatures 1 to 3). In this context, Patent Literature 4 relates to an apparatus for reducing nitrogen oxides contained in exhaust gas from an engine and purifying the exhaust gas.

[Citation List]

[Patent Literature]

[Patent Literature 1] International Publication No. WO 2010/021315
[Patent Literature 2] JP 2015 196115 A
[Patent Literature 3] JP 2016 195992 A
[Patent Literature 4] JP 2012 062818 A

[Summary of Invention]

[Technical Problem]

Vehicle emissions control has increasingly tightened in recent years, representative examples including Emissions Control Stages V and IV enforced in European Union (EU), and accordingly, further improvement of the purification performance of exhaust gas purification catalysts has been required.

The conventional SCR catalyst obtained using transition metal ion-exchange zeolite tends to improve in NO$_x$ removal performance depending on the amount of ammonia adsorbed to the SCR catalyst. Among other SCR catalyst materials, transition metal ion-exchange zeolite is widely employed in urea SCR systems because one with a relatively large maximum amount of NH$_3$ adsorbed can be easily obtained, good usability is attained, and higher NO$_x$ removal performance is expected.

However, the findings by the present inventors have shown that a SCR catalyst obtained using the conventional transition metal ion-exchange zeolite (zeolite-based catalyst material) has insufficient $NO_x$ removal performance under a condition of a low amount of ammonia adsorbed, and there is a tendency that high $NO_x$ removal performance desired cannot be obtained in a practical sense unless a sufficient amount of ammonia (e.g. about 40 wt% or more) is adsorbed with respect to the maximum amount of $NH_3$ adsorbed in the SCR catalyst.

It is considered that ammonia (or urea used as a precursor of ammonia) may be excessively supplied (injected) for solving such a problem. However, when an excessive amount of ammonia or the like is supplied in this way, the problem arises that the amount of ammonia flowing out to the downstream side of an exhaust gas flow channel ($NH_3$ slip) increases, and a large amount of an ammonia oxidation catalyst or the like for purifying the ammonia is necessary. When the amount of $NH_3$ slip is increased, the problem arises that it is necessary to redesign and evaluate the system because there may be cases where admissibility requirements of self-diagnosis functions such as OBD2 (On-board diagnostics 2) and J-OBD (Japan on-board diagnosis) are not met.

The present invention has been made in view of the above-described problems. That is, an object of the present invention is to provide an exhaust gas purification apparatus with excellent $NO_x$ removal performance, which can exhibit relatively high $NO_x$ removal performance even under a condition of a relatively low amount of ammonia adsorbed.

[Solution to Problem]

The present inventors have extensively conducted studies for solving the above-described problems. As a result, it has been found that the above-described problems can be solved by using two catalyst regions having predetermined catalyst materials and physical properties in combination in a predetermined sequence state as a SCR catalyst, leading to completion of the present invention.

That is, the present invention provides various specific aspects shown below.

(1) An exhaust gas purification apparatus for lean combustion engines, comprising at least: one or more oxidation catalysts which oxidize at least one selected from the group consisting of CO, HC, NO and $NH_3$ in an exhaust gas discharged from a lean combustion engine; a reducing agent supplying unit for supplying one or more reducing agents selected from the group consisting of a urea component and an ammonia component into an exhaust gas flow channel; and one or more selective reducing catalysts which adsorb ammonia and bring the ammonia into contact with $NO_x$ to perform reduction, wherein the one or more selective reducing catalysts comprise a first catalyst region containing a non-zeolite-based catalyst material containing at least an oxygen storage and release material and a transition metal element, and a second catalyst region containing at least zeolite and a transition metal element supported on the zeolite, wherein the first catalyst region contains at least the oxygen storage and release material and one or more transition metal elements selected from the group consisting of W, Nb and Ti supported on the surface of the oxygen storage and release material, and the second catalyst region contains at least the zeolite and one or more selected from the group consisting of Cu, Fe, Ce, Mn, Ni, Co, Ca, Ag, Rh, Ru, Pd, Pt, Ir and Re and supported on the zeolite, the maximum amount of $NH_3$ adsorbed per unit volume of the first catalyst region is smaller than the maximum amount of $NH_3$ adsorbed per unit volume of the second catalyst region under a condition of $NH_3$ adsorption at 33% of the saturated adsorption amount, and the first catalyst region is arranged on the upstream side of the exhaust gas flow channel for the exhaust gas with respect to the second catalyst region so that the exhaust gas contacts the first catalyst region and the second catalyst region in this order.

(2) The exhaust gas purification apparatus for lean combustion engines according to (1), wherein a first catalyst carrier supporting the first catalyst region and the second catalyst region is zone-coated with at least the first catalyst region and the second catalyst region, and the first catalyst carrier is arranged in the exhaust gas flow channel so that the first catalyst region is located on the upstream side of the exhaust gas flow channel with respect to the second catalyst region.

(3) The exhaust gas purification apparatus for lean combustion engines according to (1), wherein at least the first catalyst region is provided on a second catalyst carrier supporting the first catalyst region, at least the second catalyst region is provided on a third catalyst carrier supporting the second catalyst region, and the second catalyst carrier and the third catalyst carrier are arranged in the exhaust gas flow channel so that the first catalyst region is located on the upstream side of the exhaust gas flow channel with respect to the second catalyst region.

(4) The exhaust gas purification apparatus for lean combustion engines according to (1), wherein the first catalyst region is provided on the second catalyst carrier supporting at least the first catalyst region, the first catalyst carrier supporting the first catalyst region and the second catalyst region is zone-coated with at least the first catalyst region and the second catalyst region, and the second catalyst carrier and the first catalyst carrier are arranged in the exhaust gas flow channel so that the first catalyst region is located on the upstream side of the exhaust gas flow channel with respect to the second catalyst region.

(5) The exhaust gas purification apparatus for lean combustion engines according to (1), wherein the first catalyst carrier supporting the first catalyst region and the second catalyst region is zone-coated with at least the first catalyst region and the second catalyst region, at least the second catalyst region is provided on the third catalyst carrier supporting the second catalyst region, and the first catalyst carrier and the third catalyst carrier are arranged in the exhaust gas flow channel so that the first catalyst region is located on the upstream side of the exhaust gas flow channel with respect to the second catalyst region.

(6) The exhaust gas purification apparatus for lean combustion engines according to any one of (1) to (5), wherein the catalyst carrier is one or more selected from the group consisting of a wall flow type catalyst carrier and a flow-through type catalyst carrier, and the first catalyst region is provided on the wall flow type catalyst carrier.

(7) The exhaust gas purification apparatus for lean combustion engines according to any one of (1) to (6), wherein the catalyst carrier is one or more selected from the group consisting of a wall flow type catalyst carrier and a flow-through type catalyst carrier, and the first catalyst region is provided on the flow-through type catalyst carrier.

(8) The exhaust gas purification apparatus for lean combustion engines according to any one of (1) to (7), wherein the catalyst carrier is one or more selected from the group consisting of a wall flow type catalyst carrier and a flow-through type catalyst carrier, and the second catalyst region is provided on the wall flow type catalyst carrier.

(9) The exhaust gas purification apparatus for lean combustion engines according to any one of (1) to (8), wherein the catalyst carrier is one or more selected from the group consisting of a wall flow type catalyst carrier and a flow-through type catalyst carrier, and the second catalyst region is provided on the flow-through type catalyst carrier.

(10) The exhaust gas purification apparatus for lean combustion engines according to any one of (1) to (9), further comprising one or more ammonia oxidation catalysts for oxidizing and removing ammonia on the downstream side of the exhaust gas flow channel of the selective reducing catalyst.

(11) The exhaust gas purification apparatus for lean combustion engines according to any one of (1) to (10), further comprising a particulate filter which collects particulate components in the exhaust gas and combusts or oxidizes and removes the particulate components, wherein the particulate filter, the first catalyst region and the second catalyst region are arranged in this order from the upstream side toward the downstream side of the exhaust gas flow channel.

(12) The exhaust gas purification apparatus for lean combustion engines according to (11), wherein the particulate filter is a catalyst-coated particulate filter comprising at least an integral structure type carrier and a noble metal-containing catalyst layer provided on the integral structure type carrier.

(13) The exhaust gas purification apparatus for lean combustion engines according to any one of (1) to (12), comprising a plurality of the oxidation catalysts, wherein at least one of the oxidation catalysts is arranged on the upstream side of the exhaust gas flow channel with respect to the first catalyst region.

(14) The exhaust gas purification apparatus for lean combustion engines according to any one of (1) to (13), comprising a plurality of the oxidation catalysts, wherein at least one of the oxidation catalysts is arranged on the downstream side of the exhaust gas flow channel with respect to the first catalyst region.

(15) The exhaust gas purification apparatus for lean combustion engines according to any one of (1) to (14), comprising a plurality of the oxidation catalysts, wherein at least one of the oxidation catalysts is arranged on the downstream side of the exhaust gas flow channel with respect to the second catalyst region.

(16) The exhaust gas purification apparatus for lean combustion engines according to any one of (1) to (15), wherein the oxygen storage and release material contains one or more selected from the group consisting of a ceria-based composite oxide and a ceria-zirconia-based composite oxide.

(17) The exhaust gas purification apparatus for lean combustion engines according to any one of (1) to (16), wherein the zeolite is zeolite having an oxygen six-membered ring structure, an oxygen double six-membered ring structure, an oxygen eight-membered ring structure and/or an oxygen twelve-membered ring structure.

(18) The exhaust gas purification apparatus for lean combustion engines according to any one of (1) to (17), wherein the zeolite is one or more selected from the group consisting of CHA, AEI, AFX, KFI, SFW, MFI and BEA.

(19) The exhaust gas purification apparatus for lean combustion engines according to any one of (1) to (18), further comprising a heating device for heating the exhaust gas passing through the exhaust gas flow channel.

(20) The exhaust gas purification apparatus for lean combustion engines according to any one of (1) to (19), further comprising a plasma generating apparatus for plasma-treating the exhaust gas passing through the exhaust gas flow channel.

[Advantageous Effects of Invention]

According to the present invention, it is possible to provide an exhaust gas purification apparatus for lean combustion engines with excellent $NO_x$ removal performance, which can exhibit relatively high $NO_x$ removal performance even under a condition of a relatively low amount of ammonia adsorbed. According to the present invention, it is possible to obtain higher $NO_x$ removal performance than ever before even in the case of exposure to a condition of a relatively low amount of ammonia adsorbed, such as that immediately after injection of a reducing agent or immediately after consumption of ammonia adsorbed to a SCR catalyst. That is, according to the present invention, it is possible to realize an exhaust gas purification apparatus for lean combustion engines in which $NO_x$ removal performance quickly rises against injection of a reducing agent and the response to the amount of the reducing agent adsorbed is improved.

[Brief Description of Drawings]

[Figure 1] Figure 1 is a schematic view showing a general configuration of an exhaust gas purification apparatus 100 for lean combustion engines according to an embodiment.

[Figure 2] Figure 2 is a conceptual diagram showing the relationship between the $NO_x$ removal rate and the amount of $NH_3$ adsorbed and the occurrence of $NH_3$ slip in a first catalyst region $SCR_1$ and a second catalyst region $SCR_2$.

[Figure 3] Figure 3 is a schematic view showing a general configuration of a modification of the exhaust gas purification apparatus 100 for lean combustion engines.

[Figure 4] Figure 4 is a schematic view showing a general configuration of a modification of the exhaust gas purification apparatus 100 for lean combustion engines.

[Figure 5] Figure 5 is a schematic view showing a general configuration of a modification of the exhaust gas purification apparatus 100 for lean combustion engines.

[Figure 6] Figure 6 is a schematic view showing a general configuration of a modification of the exhaust gas purification apparatus 100 for lean combustion engines.

[Description of Embodiment]

Hereinafter, an embodiment of the present invention will be described in detail with reference to the drawings. Relative positions such as the upper, the lower, the left and the right are based on the relative positions shown in the drawings unless otherwise specified. The dimensional ratios in the drawings are not limited to the ratios shown in the drawings. It is to be noted that the following embodiment is illustrative for explaining the present invention, and the present invention is not limited thereto. In the present description, for example, the representation of the numerical range of "1 to 100" includes both the upper limit value "100" and the lower limit value "1". The same applies to the representations of other numerical ranges. Further, in the present description, the term "D50 particle diameter" refers to a particle diameter at which the integrated value at smaller particle diameters reach 50% of the total in a cumulative distribution of particle diameters on a volume basis. The "D50 particle diameter" means a so-called median diameter, which is a value obtained by performing measurement with a laser diffraction particle diameter distribution measuring apparatus (e.g. Laser Diffraction Particle Diameter Distribution Measuring Apparatus SALD-3100 manufactured by Shimadzu Corporation). The BET specific surface area is a value determined by a BET one-point method using a specific surface area/pore distribution measuring apparatus (product name: BELSORP-miniII manufactured by MicrotracBell Corp.) and analysis software (product name: BEL_Master manufactured by MicrotracBell Corp.).

(Embodiment)

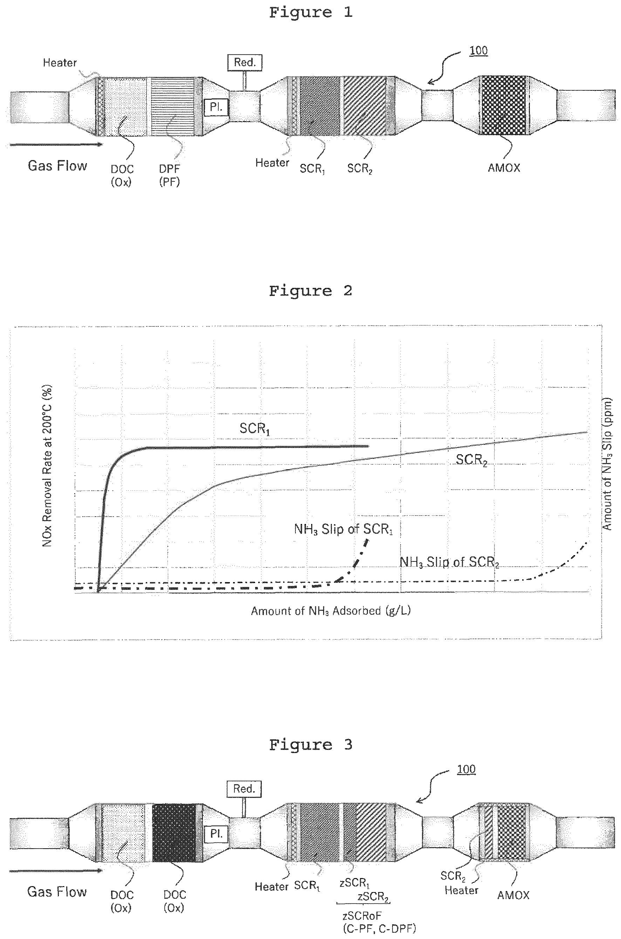

Figure 1 is a schematic view showing a general configuration of an exhaust gas purification apparatus 100 for lean combustion engines according to the present embodiment. The exhaust gas purification apparatus 100 for lean combustion engines comprises at least one or more oxidation catalysts $O_x$ which oxidize at least one selected from the group consisting of CO, HC, NO and $NH_3$ in an exhaust gas discharged from a lean combustion engine such as a diesel engine; a reducing agent supplying unit Red. for supplying one or more reducing agents selected from the group consisting of a urea component and an ammonia component into an exhaust gas flow channel; and one or more selective reducing catalysts SCR which adsorb ammonia and bring the ammonia into contact with $NO_x$ to perform reduction. In the present embodiment, the oxidation catalyst $O_x$ which oxidizes CO, HC, NO, and $NH_3$ in the exhaust gas, a particulate filter (PF) for collecting particulate matters contained in the exhaust gas, a plasma generating apparatus Pl. for plasma-treating the exhaust gas, the reducing agent supplying unit Red. for supplying a urea component, an ammonia component and the like, the selective reducing catalysts SCR which reduces $NO_x$ in the exhaust gas with ammonia as a reducing agent, and an ammonia oxidation catalyst (AMOX) which oxidizes and removes excess ammonia are provided in this order from the upstream side toward the downstream side of the exhaust gas flow channel.

In the exhaust gas purification apparatus 100 for lean combustion engines, a first catalyst region $SCR_1$ with a relatively small maximum amount of $NH_3$ adsorbed per unit volume and a second catalyst region $SCR_2$ with a relatively large maximum amount of $NH_3$ adsorbed per unit volume are employed, and the first catalyst region $SCR_1$ is arranged on the upstream side of the exhaust flow channel with respect to the second catalyst region $SCR_2$ so that the exhaust gas contacts the first catalyst region $SCR_1$ and the second catalyst region $SCR_2$ in this order.

The catalyst material of the first catalyst region $SCR_1$ used here contains at least an oxygen storage and release material and a transition metal element (hereinafter, sometimes referred to as a "non-zeolite-based catalyst material"). The catalyst material of the second catalyst region $SCR_2$ contains at least zeolite and a transition metal element supported on the zeolite (hereinafter, sometimes referred to as a "zeolite-based catalyst material"). By using a non-zeolite-based catalyst material as the catalyst material of the first catalyst region $SCR_1$ and a zeolite-based catalyst material as the catalyst material of the second catalyst region $SCR_2$ as mentioned above, and placing these catalyst materials in the above-described sequence, higher NOx removal performance can be exhibited than ever before even under a condition of a relatively low amount of $NH_3$ adsorbed. The reason for this is not certain, and is thought to be as follows.

In the exhaust gas purification apparatus 100 for lean combustion engines according to the present embodiment, a non-zeolite-based catalyst material is used as the catalyst material of the first catalyst region $SCR_1$. As compared to zeolite-based catalyst materials used heretofore, the non-zeolite-based catalyst material allows the $NO_x$ removal reaction to proceed more easily even under a condition of a relatively low amount of $NH_3$ adsorbed because the adsorption point of $NH_3$ and the adsorption point of a transition metal such as W, Ce or Zr are close to each other. Furthermore, in the exhaust gas purification apparatus 100 for lean combustion engines according to the present embodiment, the maximum amount of $NH_3$ adsorbed per unit volume of the first catalyst region $SCR_1$ is set to be smaller than the maximum amount of $NH_3$ adsorbed per unit volume of the second catalyst region $SCR_2$, and therefore even when the amount of $NH_3$ supplied is relatively small (e.g. under a condition of $NH_3$ adsorption at 0 to 60% of the saturated adsorption amount), the first catalyst region $SCR_1$ easily maintains a high $NH_3$ adsorption ratio, and easily reaches subsequent saturated adsorption of $NH_3$. Therefore, as shown in Figure 2, the first catalyst region $SCR_1$ according to the present embodiment exhibits high $NO_x$ removal performance from the relatively early stage under a condition of a relatively small amount of $NH_3$ adsorbed. In the present description, the maximum amount of $NH_3$ adsorbed (saturated adsorption amount) per unit volume of the first catalyst region $SCR_1$ and the second catalyst region $SCR_2$ is the amount of $NH_3$ adsorbed at which the $NH_3$ concentration at a catalyst outlet reaches 5 ppm when the first catalyst region $SCR_1$ and the second catalyst region $SCR_2$ are each placed in a system that is an exhaust gas flow channel and a model gas containing a $NH_3$ gas at a predetermined concentration is supplied into the system from the upstream side toward the downstream side as shown in an example described later.

Since the maximum amount of $NH_3$ adsorbed per unit volume is relatively small as described above, and so to speak, the first catalyst region $SCR_1$ with a relatively small $NH_3$ volume is used, saturated adsorption is reached in a relatively early stage in the first catalyst region $SCR_1$, and therefore the amount of $NH_3$ slip increases in a relatively early stage in the first catalyst region $SCR_1$ (see Figure 2). $NH_3$ slipped in the first catalyst region $SCR_1$ is adsorbed to the second catalyst region $SCR_2$ to increase the adsorption ratio of $NH_3$ in the second catalyst region $SCR_2$. Consequently, the $NO_x$ removal properties of the second catalyst region $SCR_2$, particularly high $NO_x$ removal performance of the second catalyst region $SCR_2$ when the amount of $NH_3$ supplied is relatively large can be sufficiently supplied. By employing a configuration in which occurrence of a relatively large amount of $NH_3$ slip is tolerated in the first catalyst region $SCR_1$ as mentioned above and a configuration in which the second catalyst region $SCR_2$ is provided on the downstream of the first catalyst region $SCR_1$, the $NO_x$ removal properties of the first catalyst region $SCR_1$ and the $NO_x$ removal properties of the second catalyst region $SCR_2$ can be mutually complemented, and this ensures that high $NO_x$ removal performance is maintained under a wide range of conditions from a condition of a low amount of $NH_3$ supplied (e.g. under a condition of $NH_3$ adsorption at 0 to 40% of the saturated adsorption amount) to a condition of a high amount of $NH_3$ supplied (e.g. under a condition of $NH_3$ adsorption at 40 to 100% of the saturated adsorption amount) (see Figure 2) .

By arranging the first catalyst region $SCR_1$ and the second catalyst region $SCR_2$ in this order from the upstream side of the exhaust gas flow channel as above, the first catalyst region $SCR_1$ functions as, so to speak, a selective reducing catalyst with a high response to the amount of $NH_3$ supplied under a condition of a low amount of $NH_3$ supplied, and exhibits relatively high $NO_x$ removal performance. The first catalyst region $SCR_1$ also functions as, so to speak, a selective reducing catalyst with high $NH_3$ slip properties, and derives higher $NO_x$ removal performance of the second catalyst region $SCR_2$ without excessively inhibiting an increase in the amount of $NH_3$ adsorbed in the second catalyst region $SCR_2$ on the downstream side. It is thought that as a result of these effects combined together, the exhaust gas purification apparatus 100 for lean combustion engines according to the present embodiment exhibits high $NO_x$ removal performance even under a condition of a relatively low amount of $NH_3$ adsorbed or even under a condition of a relatively high amount of $NH_3$ adsorbed. It is to be noted that the effects are not limited thereto.

Hereinafter, the effects of the present invention will be described in more detail by way of examples. Here, wall flow type structures were wash-coated with the catalyst materials to prepare selective reducing catalysts, respectively, and a plurality of combination models was prepared in which these catalysts were arranged on the upstream side and the downstream side of the exhaust gas flow channels in combinations shown below (selective reducing catalysts). The $NO_x$ removal performance of each model was measured with a $NO_x$ model gas test apparatus under the following conditions. Table 1 shows the measurement results.

The measurement conditions are as follows.

• Evaluation apparatus: (manufactured by MHI Solution Technologies Co., Ltd.)

- Quantitative analysis apparatus: FTIR FAST-1400 (manufactured by Iwata Dengyo Co., Ltd.)
- Catalyst size: $\phi$25.4 mm × 20 mm (front stage: $\phi$25.4 mm × 10 mm + rear stage: $\phi$25.4 mm × 20 mm) 400 cells/4.5 mills, total 10 mL
- Space velocity: 40000 tr1
- Total gas flow rate: 6.8 L/min
- Reaction temperature: 200°C
- Model gas composition: NO: 75 ppm, $NO_2$: 25 ppm, $NH_3$: 80 ppm, $O_2$: 6%, $H_2O$: 12%, $N_2$: balance
· The gas concentrations of $NH_3$, NO, $NO_2$ and $N_2O$ at the catalyst inlet and outlet were measured, and the performance of each catalyst ($NO_x$ removal rate and amount of $NH_3$ adsorbed) was evaluated. The operation procedure is as follows. A gas other than $NH_3$ was fed at a predetermined concentration in advance, and $NH_3$ gas was fed at a predetermined concentration. The amount of $NH_3$ adsorbed at which the $NH_3$ concentration at a catalyst outlet reached 5 ppm was taken as a saturated adsorption amount (maximum amount of $NH_3$ adsorbed), and the $NO_x$ removal rate at a saturated adsorption amount of 33% was calculated. The $NO_x$ removal rate and the amount of $NH_3$ adsorbed were calculated on the basis of the following calculation expressions.

$$NO_x \text{ removal rate (\%)} = \{(NO_x (= NO + NO_2)$$
$$\text{concentration at inlet}) - (NO_x \text{ concentration at outlet})\}$$
$$/ (NO_x \text{ concentration at inlet}) \times 100$$

$$\text{Amount of } NH_3 \text{ adsorbed (g/L)} = \{(\text{amount of } NH_3$$
$$\text{introduced (g))} - (\text{amount of } NH_3 \text{ discharged (g))} -$$
$$(\text{amount of } NH_3 \text{ used for } NO_x \text{ removal (g))}\} / (\text{catalyst}$$
$$\text{volume})$$

[Table 1]

| | SCR on upstream side | | SCR on downstream side | | Maximum amount of $NH_3$ adsorbed saturated adsorption at 33% (g/L) | NOx removal rate |
|---|---|---|---|---|---|---|
| | Catalyst material | Maximum amount of $NH_3$ adsorbed (g/L) | Catalyst material | Maximum amount of $NH_3$ adsorbed (g/L) | | |
| Example 1 | Cu-supported CHA zeolite Fe-supported CHA zeolite | 0.51 | Cu-supported CHA zeolite Fe-supported CHA zeolite | 0.51 | 0.34 | 44.8% |
| Example 2 | Cu-supported CHA zeolite Fe-supported CHA zeolite | 0.63 | Cu-supported CHA zeolite Fe-supported CHA zeolite | 0.63 | 0.42 | 46.3% |
| Example 3 | Cu-supported CHA zeolite | 0.62 | Cu-supported CHA zeolite | 0.62 | 0.41 | 45.9% |

(continued)

|  | SCR on upstream side | | SCR on downstream side | | Maximum amount of NH$_3$ adsorbed saturated adsorption at 33% (g/L) | NOx removal rate |
|---|---|---|---|---|---|---|
|  | Catalyst material | Maximum amount of NH$_3$ adsorbed (g/L) | Catalyst material | Maximum amount of NH$_3$ adsorbed (g/L) |  |  |
| Example 4 | W-supported ceria zirconia Fe-supported CHA zeolite | 0.24 | Cu-supported CHA zeolite Fe-supported CHA zeolite | 0.51 | 0.24 | 53.0% |
| Example 5 | W-supported ceria zirconia Cu-supported CHA zeolite | 0.42 | Cu-supported CHA zeolite | 0.62 | 0.34 | 53.8% |
| Example 6 | W-supported ceria zirconia Fe-supported CHA zeolite | 0.26 | Cu-supported CHA zeolite | 0.62 | 0.29 | 57.2% |
| Example 7 | W-supported ceria zirconia | 0.25 | Cu-supported CHA zeolite | 0.62 | 0.29 | 57.9% |
| Example 8 | Cu-supported CHA zeolite Fe-supported CHA zeolite | 0.51 | W-supported ceria zirconia Fe-supported CHA zeolite | 0.24 | 0.27 | 44.8% |

As shown in Table 1, in contrast to the SCR catalysts of Examples 1 to 3 which are conventional techniques (examples in which transition metal ion-exchange zeolite is used in the SCR on each of the upstream side and the downstream side of the exhaust gas flow channel), the SCR catalysts of Examples 4 to 7 corresponding to the present embodiment (examples in which the first catalyst region SCR$_1$ is provided on the upstream side and the second catalyst region SCR$_2$ is provided on the downstream side of the exhaust gas flow channel) produced high NO$_x$ removal performance although the total maximum amount of NH$_3$ adsorbed at a saturated adsorption amount of 33% was low). For the SCR catalyst of Example 8 (example in which the second catalyst region SCR$_2$ is provided on the upstream side of the exhaust gas flow channel, and the first catalyst region SCR$_1$ is provided on the downstream side), the total maximum amount of NH$_3$ adsorbed at a saturated adsorption amount of 33% was as low as that of the SCR catalyst of each of Examples 4 to 7 corresponding to the present embodiment, and only a level of NO$_x$ removal performance equivalent to that of the SCR catalyst of each of Examples 1 to 3, which are conventional techniques, was obtained. These results show that in the exhaust gas purification apparatus 100 for lean combustion engines according to the present embodiment, the SCR catalyst can be made to function as a selective reducing catalyst with a high response to the amount of NH$_3$ supplied by providing the first catalyst region SCR$_1$ containing at least an oxygen storage and release material and a transition metal element on the upstream side of the exhaust gas flow channel and providing the second catalyst region SCR$_2$ on the downstream side of the exhaust gas flow channel, and this ensures that relatively high NO$_x$ removal performance is exhibited even under a condition of a relatively low amount of ammonia adsorbed. Hereinafter, the constituent elements will be described in detail.

[Oxidation Catalyst $O_x$]

The oxidation catalyst $O_x$ is a catalyst which oxidizes CO, HC, NO, and $NH_3$ in the exhaust gas. In the present description, the oxidation catalyst $O_x$ conceptually includes, in addition to the above-described DOC, a lean $NO_x$ storage catalyst (LNT, lean $NO_x$ trap) which stores $NO_x$ under a lean condition and releases $NO_x$ under a rich condition to oxidize CO and HC to $CO_2$ and $H_2O$ and reduce $NO_x$ to $N_2$, and catalyst-coated PF (cPF) obtained by applying such a catalyst onto PF. As the oxidation catalyst $O_x$ in the exhaust gas purification apparatus 100 for lean combustion engines, composite particles including base material particles of metal oxides such as alumina, zirconia and ceria and zeolite and platinum group metals (PGMs) as catalytically active components supported on such carriers are generally used. These are known in the art in a variety of kinds, and as the oxidation catalyst $O_x$, one of the various oxidation catalysts can be used, or two or more thereof can be appropriately combined and used in any combination.

As the oxidation catalyst $O_x$, catalysts are preferably used in which a catalyst layer including base material particles that are inorganic particulates and a platinum group element-supported catalyst material with a platinum group element supported on the base material particles is provided on an integral structure type catalyst carrier such as a honeycomb structure. By forming the oxidation catalyst $O_x$ using such a platinum group element-supported catalyst material, high exhaust gas purification performance can be achieved while an increase in pressure loss is inhibited.

Here, as the inorganic particulates as base material particles supporting a platinum group element, an inorganic compound heretofore used in this type of exhaust gas purifying catalysts can be considered. Examples thereof include oxides such as zeolite, cerium oxide (ceria: $CeO_2$), oxygen storage and release materials (OSC) such as ceria-zirconia composite oxides (CZ composite oxides), aluminum oxides (alumina: $Al_2O_3$) such as $\gamma$-alumina, $\beta$-alumina, $\delta$-alumina, $\eta$-alumina and $\theta$-alumina, zirconium oxide (zirconia: $ZrO_2$), silicon oxide (silica: $SiO_2$) and titanium oxide (titania: $TiO_2$), and composite oxides containing any of these oxides as a main component, and the type thereof is not particularly limited. They may be composite oxides or solid solutions containing a rare earth element such as lanthanum or yttrium, a transition metal element or an alkaline earth metal. One of these inorganic particulates can be used, or two or more thereof can be used in any combination and ratio. The oxygen storage and release material means a material which stores or releases oxygen depending on an external environment.

The average particle diameter $D_{50}$ of the base material particles of the oxidation catalyst $O_x$ can be appropriately set depending on desired performance, and is not particularly limited. From the viewpoint of maintaining a large specific surface area and enhancing heat resistance to increase the number of their own catalytically active sites, the average particle diameter $D_{50}$ of the base material particles is preferably 0.5 to 100 $\mu$m, more preferably 1 to 100 $\mu$m, still more preferably 1 to 50 $\mu$m. The BET specific surface area of the base material particles can be appropriately set depending on desired performance, and is not particularly limited, and from the viewpoint of maintaining a large specific surface area and enhancing catalytic activity, the BET specific surface area by the BET one-point method is preferably 10 to 500 $m^2$/g, more preferably 20 to 300 $m^2$/g, still more preferably 30 to 200 $m^2$/g. As various materials to be used as the base material particles of the oxidation catalyst $O_x$, a large number of materials of various grades are commercially available from domestic and foreign manufacturers, and depending on required performance, commercial products of various grades can be used as the base material particles. The base material particles can also be produced by methods known in the art.

Examples of the platinum group element include platinum (Pt), palladium (Pd), rhodium (Rh), ruthenium (Ru), iridium (Ir) and osmium (Os). One of the platinum group elements can be used, or two or more thereof can be used in any combination and ratio. From the viewpoint of improving the exhaust gas purification performance, suppressing advancement of grain growth (sintering) of the platinum group element on the base material particles, etc., the content ratio of the platinum group element in the oxidation catalyst $O_x$ (mass of the platinum group element per L of the integral structure type catalyst carrier) is, normally, preferably 0.1 to 20 g/L, more preferably 0.2 to 15 g/L, still more preferably 0.3 to 10 g/L.

The oxidation catalyst $O_x$ may contain various other catalyst materials and co-catalyst known in the art and various additives. The oxidation catalyst $O_x$ may contain binders such as a variety of sols such as, for example, boehmite, alumina sol, titania sol, silica sol and zirconia sol; and soluble salts such as aluminum nitrate, aluminum acetate, titanium nitrate, titanium acetate, zirconium nitrate and zirconium acetate. The oxidation catalyst $O_x$ may further contain a Ba-containing compound in addition to the above-described components. By adding a Ba-containing compound, improvement of heat resistance, and activation of catalyst performance can be expected. Examples of the Ba-containing compound include, but are not particularly limited to, sulfates, carbonates, composite oxides and oxides. More specific examples thereof include BaO, $Ba(CH_3COO)_2$, $BaO_2$, $BaSO_4$, $BaCO_3$, BaZrOs and $BaAl_2O_4$. Further, the oxidation catalyst $O_x$ may contain a dispersion stabilizer such as a nonionic surfactant or an anionic surfactant; a pH adjuster; and a viscosity modifier.

As the integral structure type catalyst carrier supporting the oxidation catalyst $O_x$, honeycomb structures commonly used for automobile exhaust gas applications are preferably used. Examples of such honeycomb structures include ceramic monolith carriers such as cordierite, silicon carbide and silicon nitrite, metal honeycomb carriers made of stainless steel, wire mesh carriers made of stainless steel, and steel wool-shaped knitted wire carriers. The shape thereof is not particularly limited, and one having any shape such as, for example, a prismatic column shape, a cylindrical shape, a spherical shape, a honeycomb shape or a sheet shape can be selected. One of these honeycomb structures can be used, or two or more thereof can be appropriately combined and used. As the honeycomb structures for automobile exhaust gas applications, flow-through type structures in which gas flow channels communicate with one another, and wall flow type structures in which some of the end surfaces of the gas flow channels are closed and a gas can be fed through the wall surfaces of the gas flow channels are widely known, and both of these structures are applicable. When the wall flow type structure is used, the oxidation catalyst $O_x$ is sometimes referred to as an oxidation catalyst OxoF (DOCoF in the case of DOC) for convenience hereinafter because it matches the catalyst-coated PF (catalyzed PF: cPF) or the catalyzed soot filter (catalyzed filter: CSF). On the other hand, when the flow-through type structure is used, the oxidation catalyst $O_x$ is sometimes referred to simply as an oxidation catalyst DOC.

In the above-described oxidation catalyst $O_x$, the total coverage of the above-described catalyst layer is not particularly limited, and from the viewpoint of the balance between catalyst performance and pressure loss, etc., the total coverage per L of the integral structure type catalyst carrier is preferably 1 to 500 g/L, more preferably 2 to 450 g/L, still more preferably 2 to 80 g/L for the wall flow type catalyst carrier and 50 to 300 g/L for the flow-through type catalyst carrier.

The catalyst layer of the oxidation catalyst $O_x$ can be used as a single layer, or can be used as a laminate with two or more layers depending on required performance. Further, the catalyst layer may be directly placed on the catalyst layer integral structure type catalyst carrier of the oxidation catalyst $O_x$, or may be provided on the integral structure type catalyst carrier with a binder layer or an underlayer interposed therebetween. As the binder layer or the underlayer, one known in the art can be used, and the type thereof is not particularly limited. It is possible to use oxides such as zeolite, cerium oxide (ceria: $CeO_2$), oxygen storage and release materials (OSC) such as ceria-zirconia composite oxides (CZ composite oxides), aluminum oxides (alumina: $Al_2O_3$) such as $\gamma$-alumina, $\beta$-alumina, $\delta$-alumina, $\eta$-alumina and $\theta$-alumina, zirconium oxide (zirconia: $ZrO_2$), silicon oxide (silica: $SiO_2$) and titanium oxide (titania: $TiO_2$), and composite oxides containing any of these oxides as a main component. The coating mass of the binder layer or the underlayer is not particularly limited, and is preferably 1 to 150 g per L, more preferably 10 to 100 g per L of the integral structure type catalyst carrier.

The number of the oxidation catalyst $O_x$ provided in the system of the exhaust gas flow channel of the exhaust gas purification apparatus 100 for lean combustion engines according to the present embodiment may be at least one, or may be two or more (e.g. two to five) depending on required performance etc. It is also possible to use a zone-coated oxidation catalyst $zO_x$ obtained by zone-coating one catalyst carrier with two oxidation catalyst materials. Hereinafter, for example, zDOC in which the initial character "z" is added means zone-coated DOC. When a plurality of oxidation catalysts $O_x$ is provided, the oxidation catalysts $O_x$ may be the same type of $O_x$, or different types of $O_x$. Examples of the sequence here include, but are not particularly limited to, DOC, DOCoF, LNT, DOC+DOC, zDOC+zDOC, DOC+LNT, zDOC+zLNT, DOC+DOCoF, zDOC+zDOC+DOC, DOC+zDOC+zDOC, DOC+LNT+DOCoF, zDOC+zLNT+DOCoF, DOC+DOCoF+DOC, DOC+DOCoF+LNT, LNT+LNT, LNT+LNT+DOCoF, LNT+DOCoF.

When a plurality of oxidation catalysts $O_x$ is provided in the system of the exhaust gas flow channel of the exhaust gas purification apparatus 100 for lean combustion engines according to the present embodiment, the oxidation catalysts $O_x$ may be arranged adjacently, or arranged separately in the exhaust gas flow channel with the selective reducing catalyst SCR, the reducing agent supplying unit, the heating device, or the plasma generating apparatus interposed therebetween the oxidation catalysts $O_x$. Depending on desired performance, for example, the oxidation catalysts $O_x$ can be arranged on the upstream side of the exhaust gas flow channel with respect to the first catalyst region $SCR_1$, the oxidation catalysts $O_x$ can be arranged on the downstream side of the exhaust gas flow channel with respect to the first catalyst region $SCR_1$, the oxidation catalysts $O_x$ can be arranged on the upstream side of the exhaust gas flow channel with respect to the second catalyst region $SCR_2$, or the oxidation catalysts $O_x$ can be arranged on the downstream side of the exhaust gas flow channel with respect to the second catalyst region $SCR_2$. When a plurality of oxidation catalysts $O_x$ is provided, these arrangement examples can be combined and applied.

[Particulate Filter PF]

In the exhaust gas purification apparatus 100 for lean combustion engines according to the present embodiment, a particulate filter PF formed of the above-described wall flow type structure is provided on the downstream side of the above-described oxidation catalyst $O_x$. This particulate filter PF is aimed at trapping particulate components (PM) such as soot in the exhaust gas discharged from the lean combustion engine, and if necessary, spraying unburned light oil on a regular basis to combust or oxidize and remove the particulate components. As such particulate filters PF, diesel particulate filters DPF are widely known. As the particulate filter PF, a catalyst-coated wall flow type structure can also be used. In this case, the particulate filter PF functions as the above-described catalyst-coated PF (catalyzed PF: cPF) or catalyzed soot filter. Details thereof are as described above, and are therefore omitted here to avoid redundancy.

[Selective Reducing Catalyst SCR]

The selective reducing catalyst SCR adsorbs ammonia stemming from a reducing agent supplied from a reducing agent supplying unit Red. (ammonia generated by thermal decomposition etc. of a urea component when the reducing agent is a urea component), and brings the ammonia into contact with $NO_x$ to perform purification by reduction.

In the present embodiment, as the selective reducing catalyst SCR, at least two catalysts which are the first catalyst region $SCR_1$ and the second catalyst region $SCR_2$ are arranged in this order from the upstream side of the exhaust gas flow channel as described above.

(First Catalyst Region $SCR_1$)

In the exhaust gas purification apparatus 100 for lean combustion engines according to the present embodiment, the first catalyst region $SCR_1$ contains a non-zeolite-based catalyst material containing at least an oxygen storage and release material and one or more transition metal elements selected from the group consisting of W, Nb, and Ti supported on the surface of the oxygen storage and release material.

As the oxygen storage and release material contained in the first catalyst region $SCR_1$, an inorganic compound heretofore used in this type of exhaust gas purifying catalyst can be considered. Specifically, ceria-based oxides and ceria-zirconia-based composite oxides having not only an excellent oxygen storage capacity but also relatively excellent heat resistance are preferably used as oxygen storage and release materials.

Examples of the ceria-based oxide include, but are not particularly limited to, cerium oxide (IV), composite oxides of cerium and rare earth elements other than cerium (note that zirconium is excluded; those containing zirconium correspond to ceria-zirconia-based composite oxides), cerium-transition element composite oxides, composite oxides of cerium, rare earth elements other than cerium (note that zirconium is excluded; in the present description, those containing zirconium correspond to ceria-zirconia-based composite oxides) and transition elements, cerium-silicon composite oxides, cerium-transition element-silicon composite oxides, and composite oxides of cerium, rare earth elements other than cerium, transition elements and silicon. Examples of the ceria-zirconia-based composite oxide include, but are not particularly limited to, cerium-zirconia, cerium-zirconia-transition element composite oxides, and composite oxides of cerium, zirconia and rare earth elements other than cerium and zirconium. Examples of the other rare earth elements include scandium, yttrium, lanthanum, praseodymium, neodymium, promethium, samarium, europium, gadolinium, terbium, dysprosium, holmium, erbium, thulium, ytterbium and lutetium. Examples of the transition metal include, but are not particularly limited to, chromium, cobalt, iron, nickel, titanium, manganese and copper. For example, a part of cerium or zirconium may be substituted with an alkali metal element or an alkaline earth metal element. One of these oxygen storage and release materials can be used, or two or more thereof can be used in any combination and ratio.

The average particle diameter $D_{50}$ of the oxygen storage and release material in the first catalyst region $SCR_1$ can be appropriately set depending on desired performance, and is not particularly limited. From the viewpoint of maintaining a large specific surface area and enhancing heat resistance to increase the number of its own catalytically active sites, the average particle diameter $D_{50}$ of the oxygen storage and release material is preferably 0.5 to 100 $\mu$m, more preferably 1 to 100 $\mu$m, still more preferably 1 to 50 $\mu$m. The BET specific surface area of the oxygen storage and release material can be appropriately set depending on desired performance, and is not particularly limited, and from the viewpoint of maintaining a large specific surface area and enhancing catalytic activity, the BET specific surface area by the BET one-point method is preferably 10 to 250 $m^2/g$, more preferably 20 to 200 $m^2/g$, still more preferably 30 to 200 $m^2/g$. As various materials to be used as the oxygen storage and release material in the first catalyst region $SCR_1$, a large number of materials of various grades are commercially available from domestic and foreign manufacturers, and depending on required performance, commercial products of various grades can be used as the oxygen storage and release material. The oxygen storage and release material can also be produced by methods known in the art.

Examples of the transition metal element contained in the first catalyst region $SCR_1$ include tungsten (W), niobium (Nb) and titanium (Ti). One of the transition metal elements can be used, or two or more thereof can be used in any combination and ratio. Here, the transition metal element is supported on the surface of the above-described oxygen storage and release material. From the viewpoint of improving exhaust gas purification performance, etc., the content ratio of the transition metal element (mass of the transition metal element per L of the integral structure type catalyst carrier) is normally, preferably 0.1 to 400 g/L, more preferably 1 to 300 g/L, still more preferably 5 to 200 g/L in terms of oxide of the transition metal element.

As the first catalyst region $SCR_1$, catalysts are preferably used in which a SCR layer containing a transition metal element-supported ceria-based oxide containing at least a ceria-based oxide and/or a ceria-zirconia-based composite oxide and a transition metal element selected from W, Nb or Ti supported on the surface thereof. Of these, W-supported ceria-based oxides, Nb-supported ceria-based oxides, Ti-supported ceria-based oxides, W-supported ceria-zirconia-based composite oxides, Nb-supported ceria-zirconia-based composite oxides, and Ti-supported ceria-zirconia-based composite oxides are particularly preferably used. Such a configuration in which a SCR layer containing a non-zeolite-based catalyst material is provided on a catalyst carrier enables achievement of high exhaust gas purification performance while inhibiting an increase in pressure loss.

Here, the first catalyst region $SCR_1$ may contain, in addition to the above-described oxygen storage and release material, other base material particles. Examples of such base material particles include particles of inorganic compounds known in the art, for example, oxides such as aluminum oxides (alumina: $Al_2O_3$) such as $\gamma$-alumina, $\beta$-alumina, $\delta$-alumina, $\eta$-alumina and $\theta$-alumina, zirconium oxide (zirconia: $ZrO_2$), silicon oxide (silica: $SiO_2$) and titanium oxide (titania: $TiO_2$), and composite oxides containing any of these oxides as a main component, and the type thereof is not particularly limited. They may be composite oxides or solid solutions containing a rare earth element such as lanthanum or yttrium, a transition metal element or an alkaline earth metal. One type of these base material particles of inorganic compounds can be used, or two or more types thereof can be used in any combination and ratio.

The first catalyst region $SCR_1$ may contain various other catalyst materials and co-catalyst known in the art and various additives. The oxidation catalyst $O_x$ may contain binders such as a variety of sols such as, for example, boehmite, alumina sol, titania sol, silica sol and zirconia sol; and soluble salts such as aluminum nitrate, aluminum acetate, titanium nitrate, titanium acetate, zirconium nitrate and zirconium acetate. The first catalyst region $SCR_1$ may further contain a Ba-containing compound in addition to the above-described components. Further, the first catalyst region $SCR_1$ may contain a dispersion stabilizer such as a nonionic surfactant or an anionic surfactant; a pH adjuster; and a viscosity modifier.

Further, the first catalyst region $SCR_1$ may contain a zeolite-based catalyst material such as zeolite or transition metal element-supported zeolite (e.g. Cu-supported zeolite, Fe-supported zeolite or Cu/Fe-supported zeolite) as long as the effects of the present invention are not excessively inhibited. When the first catalyst region $SCR_1$ contains a zeolite-based catalyst material, the content thereof is preferably 0.1 to 300 g/L, more preferably 1 to 200 g/L, still more preferably 5 to 100 g/L. The first catalyst region $SCR_1$ may contain a platinum group element such as rhodium (Rh), ruthenium (Ru), palladium (Pd), platinum (Pt) or iridium (Ir) or a noble metal element such as gold (Au) or silver (Ag) as a catalytically active component. One of the platinum group elements and noble metal elements can be used, or two or more thereof can be used in any combination and ratio. It is to be noted that preferably, the first catalyst region $SCR_1$ is substantially free of the platinum group element or the noble metal element because it oxidizes an ammonia component to generate $NO_x$. From such a viewpoint, the content of the platinum group element in the first catalyst region $SCR_1$ is preferably less than 3 g/L, more preferably less than 1 g/L, still more preferably less than 0.5 g/L.

As the integral structure type catalyst carrier supporting the first catalyst region $SCR_1$, honeycomb structures commonly used for automobile exhaust gas applications are preferably used. Specific examples of the honeycomb structure are as described in the paragraph of [Oxidation Catalyst $O_x$], and are omitted here to avoid redundancy. As the honeycomb structure supporting the first catalyst region $SCR_1$, both of a flow-through type structure and a wall flow type structure are applicable. Here, when the wall flow type structure is used, the first catalyst region $SCR_1$ is sometimes referred to as $SCR_1oF$ for convenience hereinafter because it matches the catalyst-coated SCR (catalyzed PF: cPF). On the other hand, when the flow-through type structure is used, the catalyst region $SCR_1$ is sometimes referred to simply as $SCR_1$.

The total coverage of the catalyst material in the first catalyst region $SCR_1$ is not particularly limited, and from the viewpoint of the balance between catalyst performance and pressure loss, etc., the total coverage per L of the integral structure type catalyst carrier is preferably 10 to 500 g/L, more preferably 20 to 400 g/L, still more preferably 30 to 300 g/L.

The first catalyst region $SCR_1$ may be directly placed on the integral structure type catalyst carrier, or may be provided on the integral structure type catalyst carrier with a binder layer or an underlayer interposed therebetween. As the binder layer or the underlayer, one known in the art can be used, and the type thereof is not particularly limited. It is possible to use, for example, oxides such as zeolite, cerium oxide (ceria: $CeO_2$), oxygen storage and release materials (OSC) such as ceria-zirconia composite oxides (CZ composite oxides), aluminum oxides (alumina: $Al_2O_3$) such as $\gamma$-alumina, $\beta$-alumina, $\delta$-alumina, $\eta$-alumina and $\theta$-alumina, zirconium oxide (zirconia: $ZrO_2$), silicon oxide (silica: $SiO_2$) and titanium oxide (titania: $TiO_2$), and composite oxides containing any of these oxides as a main component. The coating mass of the binder layer or the underlayer is not particularly limited, and is preferably 1 to 150 g, more preferably 10 to 100 g per L of the integral structure type catalyst carrier.

(Second Catalyst Region $SCR_2$)

In the exhaust gas purification apparatus 100 for lean combustion engines according to the present embodiment, the second catalyst region $SCR_2$ contains at least a zeolite-based catalyst material containing at least zeolite and a transition metal element supported on the zeolite, namely one or more selected from the group consisting of Cu, Fe, Ce, Mn, Ni, Co, Ca, Ag, Rh, Ru, Pd, Pt, Ir, and Re.

As the zeolite contained in the second catalyst region $SCR_2$, various zeolites heretofore used in this type of exhaust gas purifying catalyst can be considered. The zeolite mentioned here includes crystal alumino silicate, and crystal metal aluminophosphates having micropores and having a layered structure similar to that of zeolite, such as crystal alumino phosphate (ALPO) and crystal silica-alumino phosphate (SAPO). Specific examples thereof include, but are not particularly limited to, those that are so called alumino-phosphate such as SAPO-34 and SAPO-18. Specific examples of the zeolite used here include, but are not particularly limited to, zeolites of Y type, A type, L type, beta type, mordenite type, ZSM-5 type, ferrierite type, mordenite type, CHA type, AEI type, AFX type, KFI type and SFW type, and crystal metal aluminophosphates such as SAPO and ALPO. One of these zeolites can be used, or two or more thereof can be used in any combination and ratio. The skeletal structures of zeolites are stored in a database by International Zeolite Association, hereinafter sometimes abbreviated as "IZA"), and zeolites specified in the IUPAC structure code (hereinafter, also referred to simply as the "structure code") can be used without particular limitation. Their structures can be identified by comparison with powder X-ray diffraction (hereinafter, referred to as "XRD") patterns described in Collection of simulated XRD powder patterns for zeolites, Fifth revised edition (2007) or XRD patterns described in Zeolite Framework Types of the IZA Structure Committee website: http://www.iza-structure.org/databases/. Of these, zeolites having heat resistance and various known skeletal structures can be used.

Of these zeolites, zeolites having an oxygen six-membered ring structure, an oxygen double six-membered ring structure, an oxygen eight-membered ring structure and/or an oxygen twelve-membered ring structure are preferable, zeolites having an oxygen six-membered ring structure, an oxygen double six-membered ring structure or an oxygen eight-membered ring structure are more preferable, and zeolites having an oxygen six-membered ring structure or an oxygen double six-membered ring structure are still more preferable. Specifically, zeolites having one or more skeletal structures selected from the group consisting of CHA, AEI, AFX, KFI, SFW, MFI and BEA are more preferable, and zeolites having one or more skeletal structures selected from the group consisting of CHA, AEI, AFX, KFI and SFW are still more preferable. In zeolite, the number of acid points varies depending on a Si/Al ratio. In general, zeolite having a low Si/Al ratio has a large number of acid points, but is degraded to a large extent in the context of durability in coexistence of water vapor, whereas zeolite having a high Si/Al ratio is excellent in heat resistance, but tends to have a small number of acid points. From such a viewpoint, the Si/Al ratio of zeolite used is preferably 1 to 500, more preferably 1 to 100, still more preferably 1 to 50.

The average particle diameter $D_{50}$ of the zeolite in the second catalyst region $SCR_2$ is not particularly limited, and can be appropriately set depending on desired performance. From the viewpoint of maintaining a large specific surface area and enhancing heat resistance to increase the number of its own catalytically active sites, the average particle diameter $D_{50}$ of the zeolite is preferably 0.5 to 100 $\mu$m, more preferably 0.5 to 50 $\mu$m, still more preferably 0.5 to 30 $\mu$m. The BET specific surface area of the zeolite is not particularly limited, and can be appropriately set depending on desired performance. From the viewpoint of maintaining a large specific surface area and enhancing catalytic activity, the BET specific surface area by the BET one-point method is preferably 10 to 1000 $m^2$/g, more preferably 50 to 1000 $m^2$/g, still more preferably 100 to 1000 $m^2$/g. As the zeolite, a large number of zeolites of various grades are commercially available from domestic and foreign manufacturers, and depending on required performance, commercial products of various grades can be used as the oxygen storage and release material. The zeolite can also be produced by methods known in the art.

Examples of the transition metal element contained in the second catalyst region $SCR_2$ include, but are not particularly limited to, nickel (Ni), cobalt (Co), copper (Cu), iron (Fe), manganese (Mn) and rhenium (Re). Of these, nickel, cobalt, copper, iron and manganese are preferable, and copper and iron are more preferable. The transition metal element is supported on the surface of the above-described zeolite. One of the transition metal elements can be used, or two or more thereof can be used in any combination and ratio. In general, as solid acid points, cations are present as counter ions in zeolite, and the cation is generally an ammonium ion or a proton. In the present embodiment, it is preferable to use zeolite as transition metal element ion-exchange zeolite in which cation sites of the zeolite are ion-exchanged with any of these transition metal elements. The ion-exchange rate of the zeolite is not particularly limited, and is preferably 1 to 100%, more preferably 10 to 95%, still more preferably 30 to 90%. An ion-exchange rate of 100% means that all of cationic species in the zeolite are ion-exchanged with transition metal element ions. The amount of Cu or Fe added with respect to the zeolite is preferably 0.1 to 10 wt%, more preferably 1 to 10 wt%, still more preferably 2 to 8 wt%, in terms of oxide (CuO or $Fe_2O_3$). All of the transition metal elements added as ion-exchange species may be ion-exchanged, or some of the transition metal elements may be present in the form of an oxide such as copper oxide or iron oxide.

As the second catalyst region $SCR_2$, catalysts are preferably used in which a SCR layer containing ion-exchange zeolite ion-exchanged with at least one transition metal element selected from the group consisting of nickel, cobalt, copper, iron and manganese is provided on an integral structure type catalyst carrier such as honeycomb structure. Of these, Cu ion-exchange zeolite and Fe ion-exchange zeolite are particularly preferably used. A configuration in which a SCR layer containing a zeolite-based catalyst material as mentioned above is provided on the catalyst carrier enables achievement of high exhaust gas purification performance while inhibiting an increase in pressure loss.

Here, the second catalyst region $SCR_2$ may contain any of the above-described oxygen storage and release materials such as ceria-based oxides and ceria-zirconia-based composite oxides and other base material particles as long as the effects of the present invention are not excessively inhibited. Examples of other base material particles include inorganic compounds known in the art, for example, oxides such as aluminum oxides (alumina: $Al_2O_3$) such as $\gamma$-alumina, $\beta$-alumina, $\delta$-alumina, $\eta$-alumina and $\theta$-alumina, zirconium oxide (zirconia: $ZrO_2$), silicon oxide (silica: $SiO_2$) and titanium oxide (titania: $TiO_2$), and composite oxides containing any of these oxides as a main component, and the type thereof is not particularly limited. They may be composite oxides or solid solutions containing a rare earth element such as lanthanum or yttrium, a transition metal element or an alkaline earth metal. One type of these oxygen storage and release materials and other base material particles can be used, or two or more thereof can be used in any combination and ratio.

The second catalyst region $SCR_2$ may contain various other catalyst materials and co-catalyst known in the art and various additives. The oxidation catalyst $O_x$ may contain binders such as a variety of sols such as, for example, boehmite, alumina sol, titania sol, silica sol and zirconia sol; and soluble salts such as aluminum nitrate, aluminum acetate, titanium nitrate, titanium acetate, zirconium nitrate and zirconium acetate. The second catalyst region $SCR_2$ may further contain a Ba-containing compound in addition to the above-described components. Further, the second catalyst region $SCR_2$ may contain a dispersion stabilizer such as a nonionic surfactant or an anionic surfactant; a pH adjuster; and a viscosity modifier.

Further, the second catalyst region $SCR_2$ may contain any of non-zeolite-based catalyst materials such as transition metal element-supported ceria-based oxides and/or ceria-zirconia-based composite oxides as long as the effects of the present invention are not excessively inhibited. When the second catalyst region $SCR_2$ contains a non-zeolite-based catalyst material, the content thereof is preferably 0.1 to 300 g/L, more preferably 1 to 200 g/L, still more preferably 5 to 100 g/L. The second catalyst region $SCR_2$ may contain an alkaline earth metal element such as Ca and Mg, and a platinum group element such as rhodium (Rh), ruthenium (Ru), palladium (Pd), platinum (Pt) or iridium (Ir) or a noble metal element such as gold (Au) or silver (Ag) as a catalytically active component. One of the platinum group elements or the noble metal elements can be used, or two or more thereof can be used in any combination and ratio. It is to be noted that preferably, the second catalyst region $SCR_2$ is substantially free of the platinum group element or the noble metal element because it oxidizes an ammonia component to generate $NO_x$. From such a viewpoint, the content of the platinum group element in the second catalyst region $SCR_2$ is preferably less than 3 g/L, more preferably less than 1 g/L, still more preferably less than 0.5 g/L.

As the integral structure type catalyst carrier supporting the second catalyst region $SCR_2$, honeycomb structures commonly used for automobile exhaust gas applications are preferably used. Specific examples of the honeycomb structure are as described in the paragraph of [Oxidation Catalyst $O_x$], and are omitted here to avoid redundancy. As the honeycomb structure supporting the second catalyst region $SCR_2$, both of a flow-through type structure and a wall flow type structure are applicable. Here, when the wall flow type structure is used, the second catalyst region $SCR_2$ is sometimes referred to as $SCR_2oF$ for convenience hereinafter because it matches the catalyst-coated SCR (catalyzed PF: cPF). On the other hand, when the flow-through type structure is used, the catalyst region $SCR_2$ is sometimes referred to simply as $SCR_2$.

The total coverage of the catalyst material in the second catalyst region $SCR_2$ is not particularly limited, and from the viewpoint of the balance between catalyst performance and pressure loss, etc., the total coverage per L of the integral structure type catalyst carrier is preferably 10 to 500 g/L, more preferably 20 to 400 g/L, still more preferably 30 to 300 g/L.

The second catalyst region $SCR_2$ may be directly placed on the integral structure type catalyst carrier, or may be provided on the integral structure type catalyst carrier with a binder layer or an underlayer interposed therebetween. As the binder layer or the underlayer, one known in the art can be used, and the type thereof is not particularly limited. It is possible to use, for example, oxides such as zeolite, cerium oxide (ceria: $CeO_2$), oxygen storage and release materials (OSC) such as ceria-zirconia composite oxides (CZ composite oxides), aluminum oxides (alumina: $Al_2O_3$) such as $\gamma$-alumina, $\beta$-alumina, $\delta$-alumina, $\eta$-alumina and $\theta$-alumina, zirconium oxide (zirconia: $ZrO_2$), silicon oxide (silica: $SiO_2$) and titanium oxide (titania: $TiO_2$), and composite oxides containing any of these oxides as a main component. The coating mass of the binder layer or the underlayer is not particularly limited, and is preferably 1 to 150 g, more preferably 10 to 100 g per L of the integral structure type catalyst carrier.

At least one first catalyst region $SCR_1$ and at least one second catalyst region $SCR_2$ may be provided in the system of the exhaust gas flow channel of the exhaust gas purification apparatus 100 for lean combustion engines according to the present invention, and two or more (e.g. two to five) first catalyst region $SCR_1$ and two or more (e.g. two to five) second catalyst region $SCR_2$ may be provided depending on required performance. The catalyst regions can also be used as zone-coated SCR (zSCR) by zone-coating one catalyst carrier with two catalyst materials to form the first catalyst region $SCR_1$ and the second catalyst region $SCR_2$. In this case, the first catalyst region $SCR_1$ and the second catalyst region $SCR_2$ are referred to as a zone-coated first catalyst region $zSCR_1$ and a zone-coated second catalyst region $zSCR_2$. When a plurality of first catalyst regions $SCR_1$ and second catalyst regions $SCR_2$ is provided, they may be the same type of first catalyst regions $SCR_1$ and the same type of second catalyst regions $SCR_2$, or may be different types of first catalyst regions $SCR_1$ and different types of second catalyst regions $SCR_2$. Further, SCR other than these first catalyst regions $SCR_1$ and the second catalyst regions $SCR_2$, which is known in the art, can also be provided. Examples of the sequence include, but are not particularly limited to, $SCR_1+SCR_2$, $zSCR_1+zSCR_2$, $SCR_1+SCR_2oF$, $SCR_1oF+SCR_2$, $SCR_1+SCR_2+SCR$, $SCR_1+SCR+SCR_2$, $SCR+SCR_1+SCR_2$, $zSCR_1+zSCR_2+SCR$, $SCR_1+zSCR_2+zSCR$, $zSCR_1+zSCR+SCR_2$, $SCR_1+zSCR+zSCR_2$, $zSCR+zSCR_1+SCR_2$, $SCR+zSCR_1+zSCR_2$, $SCR_1oF+SCR_2+SCR$, $SCR_1+SCR_2oF+SCR$, $SCR_1+SCR_2+SCRoF$, $SCR_1oF+zSCR_2+zSCR$, $zSCR_1+zSCR_2+SCRoF$, $SCR_1oF+SCR+SCR_2$, $SCRoF+SCR_1+SCR_2$, $SCR_1+SCRoF+SCR_2$, $SCR+SCR_1oF+SCR_2$, $SCR_1+SCR+SCR_2oF$, $SCR+SCR_1+SCR_2oF$, $SCR_1oF+zSCR+zSCR_2$, $SCRoF+zSCR_1+zSCR_2$, $zSCR_1+zSCR+SCR_2oF$, $zSCR+zSCR_1+SCR_2oF$, $zSCR_1oF+zSCR_2oF$.

When the first catalyst region $SCR_1$ and the second catalyst region $SCR_2$ are provided in the system of the exhaust gas flow channel of the exhaust gas purification apparatus 100 for lean combustion engines according to the present embodiment, the arrangement state thereof is not particularly limited as long as one or more first catalyst regions $SCR_1$ are arranged on the upstream side of the exhaust gas flow channel with respect to the second catalyst region $SCR_2$. That is, the first catalyst region $SCR_1$ and the second catalyst region $SCR_2$ may be arranged adjacently or arranged separately, or may be arranged separately in the exhaust gas flow channel with an oxidation catalyst $O_x$, a reducing agent supplying unit, a heating device, or a plasma generating apparatus interposed therebetween. When the catalyst regions are arranged adjacently, one integral structure type catalyst carrier may be zone-coated with the first catalyst region $SCR_1$ and the second catalyst region $SCR_2$, or a selective reducing catalyst with the first catalyst region $SCR_1$ provided on one integral structure type catalyst carrier and a selective reducing catalyst with the second catalyst region $SCR_2$ provided on one integral structure type catalyst carrier may be tandem-arranged in series.

The volumes (sizes) of the first catalyst region $SCR_1$ and the second catalyst region $SCR_2$, the coating mass of catalyst materials for these catalyst regions are not particularly limited, and can be adjusted with consideration given to the type and the displacement of an engine to which the exhaust gas purification apparatus 100 for lean combustion engines according to the present embodiment is applied, and depending on the required catalyst amount and purification performance. Diesel engines range from those for compact cars with a displacement of about 1 L to those for heavy machines (heavy duties) with a displacement of more than 50 L, and $NO_x$ in the exhaust gas discharged from those diesel engines considerably varies depending on the operation state of the diesel engine and the method for control of combustion. The SCR catalyst used for purifying $NO_x$ in the exhaust gas discharged from these diesel engines can be selected in accordance with a diversity of diesel engine displacements ranging from about 1 L to more than 50 L. For example, adjustment can be appropriately made by increasing or decreasing the diameter and the length of a honeycomb structure used, the types and the combination ratios of catalyst materials used, the coating lengths of the first catalyst region $SCR_1$ and the second catalyst region $SCR_2$, and the coating mass of catalyst materials.

[Reducing Agent Supplying Unit Red.]

In the exhaust gas purification apparatus 100 for lean combustion engines according to the present embodiment, the reducing agent supplying unit Red. supplies one or more reducing agents selected from a urea component and an ammonia component into the exhaust gas flow channel. As the reducing agent supplying unit Red., one known in the art can be used, and the type thereof is not particularly limited. Normally, one composed of a reducing agent storage tank, a pipe connected to the tank, and a spray nozzle mounted at the tip of the pipe is used (not shown).

The spray nozzle of the reducing agent supply means Red. is placed at a position on the upstream side of the above-described selective reducing catalyst SCR. In particular, in the exhaust gas purification apparatus 100 for lean combustion engines according to the present embodiment, a plurality of selective reducing catalysts SCR having at least the first catalyst region $SCR_1$ and the second catalyst region $SCR_2$ are employed, and therefore it is preferable that the spray nozzle of the reducing agent supplying unit Red. be arranged on the upstream side of the first catalyst region $SCR_1$ located at the most upstream. When a plurality of first catalyst region $SCR_1$ and second catalyst regions $SCR_2$ is provided, or other SCRs are used in combination, spray nozzles of the reducing agent supplying unit Red. may be provided at a plurality of points in the case where these catalyst regions are arranged separately.

The reducing component is selected from a urea component and an ammonia component. As the urea component, a standardized aqueous urea solution at a concentration of 31.8 to 33.3 wt%, such as, for example, Adblue (product name) can be used. As the ammonia component, aqueous ammonia as well as ammonia gas can be used. Since $NH_3$ which is a reducing component itself has harmful properties such as an irritating odor, a method is preferable in which rather than directly using $NH_3$ as a reducing component, aqueous urea is added from the upstream side of the selective reducing catalyst SCR to generate $NH_3$ through thermal decomposition or hydrolysis, and the $NH_3$ is applied as the reducing agent.

[Heating device (Heater)]

In the exhaust gas purification apparatus 100 for lean combustion engines according to the present embodiment, an electric heating device (Heater) (catalyst heating device) is provided in the exhaust gas flow channel on the downstream side of the spray nozzle of the reducing agent supplying unit Red. and on the upstream side of the selective reducing catalyst SCR. The heating device is electrically connected to ECU and an on-vehicle power supply (not shown), and by controlling the power outputs of the ECU and the power supply, the temperature of the heating device (Heater), and hence the temperature of the exhaust gas in the exhaust gas flow channel can be controlled. One or more reducing agents selected from the group consisting of a urea component and an ammonia component and supplied from the reducing agent supplying unit Red. are heated with the heating device (Heater) in the exhaust gas flow channel to turn into $NH_3$ through thermal decomposition or hydrolysis, and adsorbed to the selective reducing catalyst SCR on the downstream side of the exhaust gas flow channel. The reactivity of urea in the hydrolysis reaction can vary depending on the concentration, the combination composition, and the pH of aqueous urea, and can be efficiently controlled by controlling the temperature of the exhaust gas in the exhaust gas flow channel. In the exhaust gas flow channel, temperature sensors and $NO_x$ sensors electrically connected to ECU are provided at various points, so that the $NO_x$ concentration and the exhaust gas temperature are monitored as needed.

In the present embodiment, the heating device (Heater) is composed of a metal honeycomb, a jacket type electric heating device mounted on the outer peripheral of the metal honeycomb, and a coil type electric heating device mounted so as to be partially embedded in the metal honeycomb main body (not shown). This metal honeycomb can be electrically heated by control of the control unit ECU, and by heat generation from the metal honeycomb, the temperature of the exhaust gas passing through the exhaust gas flow channel can be controlled. In the present embodiment, a heat insulating material is provided on the outer periphery of an exhaust channel 51 over the entire length (not shown). The heat insulating material is not particularly limited, and can be appropriately selected from those known in the art, and for example, one obtained using cellulose fibers or rock wool is suitably used. The heating device (Heater) used here may be, for example, a jacket type electric heating device or an electrically heated catalyst (EHC) with a SCR catalyst supported on the metal honeycomb main body. Heating of the metal honeycomb can also be performed by causing the metal honeycomb itself to generate heat directly with an electric current passing through the metal honeycomb main body. In this case, by connecting the metal honeycomb to an on-vehicle power supply and controlling the power output of the power supply by the control unit ECU, the temperature of the metal honeycomb, and hence the temperature of the exhaust gas in the exhaust flow channel can be controlled.

[Ammonia Oxidation Catalyst AMOX]

In the exhaust gas purification apparatus 100 for lean combustion engines according to the present embodiment, an ammonia oxidation catalyst AMOX which oxidizes and removes excess ammonia is provided on the downstream side of the selective reducing catalyst SCR. As the ammonia oxidation catalyst AMOX, one known in the art can be used, and the type thereof is not particularly limited.

Normally, in a urea SCR system, the ammonia oxidation catalyst AMOX is additionally used if $NO_x$ or $NH_3$ cannot be purified to a regulatory value or a smaller value. Therefore, the ammonia oxidation catalyst AMOX includes a catalyst having a function of oxidizing $NH_3$, and a catalyst component having a function of purifying $NO_x$. The catalyst having a function of oxidizing $NH_3$ is preferably one in which one or more elements selected from platinum, palladium, and rhodium are supported on an inorganic material composed of one or more selected from alumina, silica, titania, and zirconia. It is also preferable to use an inorganic material whose heat resistance is improved by adding a co-catalyst such as a rare earth, an alkali metal or an alkaline earth metal. Platinum and palladium as noble metals exhibit excellent oxidative activity. When the noble metal is supported on the inorganic material having a high specific surface area and high heat resistance, the noble metal component is hardly sintered, and thus the specific surface area of the noble metal is kept high to increase the number of active sites, so that high activity can be exhibited. On the other hand, as the catalyst having a function of purifying $NO_x$, all of the non-zeolite-based catalyst materials and the zeolite-based catalyst materials described in the paragraph of "Selective reducing catalyst SCR" can be used. The two types of catalysts may be uniformly mixed and applied to a honeycomb structure of integral type, but may be applied such that a catalyst having a function of oxidizing $NH_3$ forms a lower layer and a catalyst having a function of purifying $NO_x$ forms an upper layer. The volumes (sizes) of the ammonia oxidation catalyst AMOX and the coating mass of catalyst material are not particularly limited, and can be adjusted with consideration given to the type and the displacement of an engine to which the exhaust gas purification apparatus 100 for lean combustion engines according to the present embodiment is applied, and depending on the required catalyst amount and purification performance.

Two or more (two to five) ammonia oxidation catalysts AMOX described above may be provided depending on required performance. The ammonia oxidation catalyst AMOX can also be used as zone-coated AMOX (zAMOX) by zone-coating one catalyst carrier with two catalyst materials. When a plurality of ammonia oxidation catalysts AMOX is provided, the arrangement state of the ammonia oxidation catalysts AMOX is not particularly limited. That is, a plurality of ammonia oxidation catalysts AMOX may be arranged adjacently or arranged separately. From the viewpoint of oxidizing and removing excess ammonia, it is preferable that at least one of a plurality of ammonia oxidation catalysts AMOX be provided on the downstream side of the selective reducing catalyst SCR, and more preferably provided at the most downstream in the exhaust gas flow channel preferably containing the oxidation catalyst Ox and the selective reducing catalyst SCR.

[Plasma Generating Apparatus Pl.]

In the exhaust gas purification apparatus 100 for lean combustion engines according to the present embodiment, a plasma generating apparatus Pl. for plasma-treating an exhaust gas is provided on the downstream side of the oxidation catalyst $O_x$ and on the upstream side on the first catalyst region $SCR_1$. This plasma generating apparatus Pl. is a so-called atmospheric pressure plasma generating apparatus (plasma reactor) which generates a low-temperature plasma obtained by discharge in the atmosphere and having low electronic energy. As the plasma generating apparatus Pl., one known in the art can be used, and the type thereof is not particularly limited. The exhaust gas passing through the exhaust gas flow channel is treated with a plasma generated by this plasma generating apparatus Pl., so that the $NO_x$ concentration further decreases (so-called plasma assisted SCR).

The exhaust gas purification apparatus 100 for lean combustion engines according to the present embodiment can be used as an apparatus for purifying an exhaust gas generated from an internal-combustion engine such as a diesel engine equipped with a urea SCR system, and is useful as an exhaust gas purifying catalyst for internal-combustion engines such as diesel engines, particularly an exhaust gas purification apparatus for diesel automobiles.

(Modification)

The exhaust gas purification apparatus 100 for lean combustion engines according to the present embodiment can be arranged in the exhaust systems of various lean combustion engines. As described above, the numbers and the locations of oxidation catalysts $O_x$, reducing agent supplying unit Red., selective reducing catalysts SCR, first catalyst regions $SCR_1$, second catalyst regions $SCR_2$, particulate filters PF, plasma generating apparatuses Pl., reducing agent supplying unit Red. and ammonia oxidation catalysts AMOX placed, and the arrangements thereof are not limited to those in the present embodiment, can be appropriately adjusted the exhaust gas regulation, the type and the displacement of lean combustion engines applied, the required catalyst amount and purification performance, and are not particularly limited. For example, the placement location can be appropriately selected from a plurality of locations such as positions immediately below the exhaust system and positions below the floor behind the exhaust system.

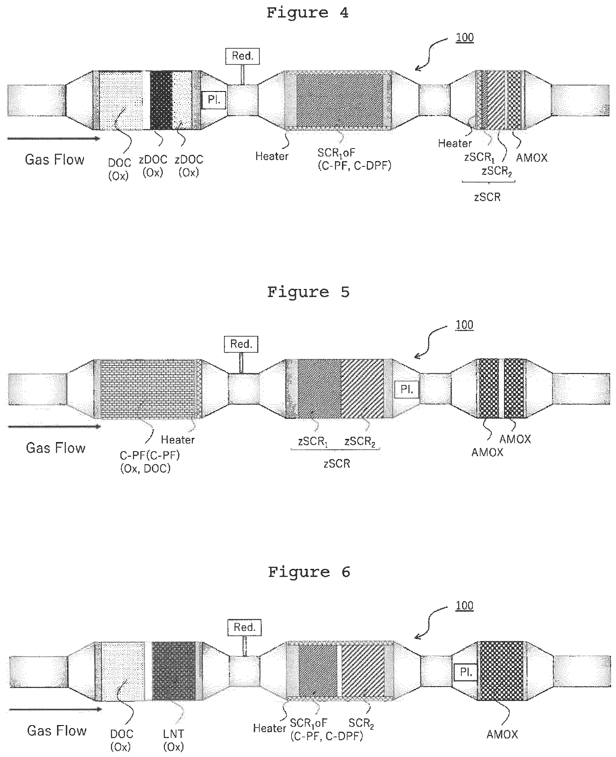

For example, as shown in Figures 3 to 6, the present embodiment can be implemented in any of layouts in which a plurality of first catalyst regions $SCR_1$ and second catalyst regions $SCR_2$ is placed, a plurality of DOCs is placed, the first catalyst region $SCR_1$ and the second catalyst region $SCR_2$ are placed separately, zSCRoF obtained by zone-coating of the first catalyst region $SCR_1$ and the second catalyst region $SCR_2$ is placed, SCR and zSCRoF are used in combination (see Figure 3), zDOC obtained by zone-coating of the oxidation catalyst Ox is placed, zDOC and DOC are used in combination, zSCRoF and zSCR are used in combination, the first catalyst region $SCR_1$ and the second catalyst region $SCR_2$ are arranged separately (see Figure 4), cPF is placed, zSCR is placed, a plurality of AMOXs is placed (see Figure 5), DOC-LNT is placed, cPF is placed (see Figure 6), etc.

[Industrial Applicability]

The exhaust gas purification apparatus for lean combustion engines according to the present invention can exhibit relatively high $NO_x$ removal performance even under a condition of a relatively low amount of ammonia adsorbed, and exhibits excellent $NO_x$ removal performance. Therefore, the exhaust gas purification apparatus for lean combustion engines according to the present invention can be widely and effectively utilized as an exhaust gas purification apparatus for lean combustion internal engines, and is particularly useful as an exhaust gas purification apparatus for lean burn gasoline cars and diesel cars.

[Reference Signs List]

| | |
|---|---|
| 100 | Exhaust gas purification apparatus for lean combustion engines |
| Ox | Oxidation catalyst |
| DOC | Oxidation catalyst (Diesel oxidation catalyst) |
| LNT | Oxidation catalyst (NOx storage catalyst) |
| PF | Particulate filter (Diesel particulate filter DOC) |
| Red. | Reducing agent supplying unit |
| SCR | Selective reducing catalyst |

SCR$_1$     First catalyst region
SCR$_2$     Second catalyst region
AMOX     Ammonia oxidation catalyst
Heater     Heating device
Pl.        Plasma generating apparatus

**Claims**

1. An exhaust gas purification apparatus for lean combustion engines, comprising at least: one or more oxidation catalysts which oxidize at least one selected from the group consisting of CO, HC, NO and NH$_3$ in an exhaust gas discharged from a lean combustion engine; a reducing agent supplying unit for supplying one or more reducing agents selected from the group consisting of a urea component and an ammonia component into an exhaust gas flow channel; and one or more selective reducing catalysts which adsorb ammonia and bring the ammonia into contact with NO$_x$ to perform reduction,

   wherein the one or more selective reducing catalysts comprise a first catalyst region containing a non-zeolite-based catalyst material containing at least an oxygen storage and release material and a transition metal element, and a second catalyst region containing at least zeolite and a transition metal element supported on the zeolite, wherein the first catalyst region contains at least the oxygen storage and release material and one or more transition metal elements selected from the group consisting of W, Nb and Ti supported on the surface of the oxygen storage and release material, and the second catalyst region contains at least the zeolite and one or more selected from the group consisting of Cu, Fe, Ce, Mn, Ni, Co, Ca, Ag, Rh, Ru, Pd, Pt, Ir and Re and supported on the zeolite,
   the maximum amount of NH$_3$ adsorbed per unit volume of the first catalyst region is smaller than the maximum amount of NH$_3$ adsorbed per unit volume of the second catalyst region under a condition of NH$_3$ adsorption at 33% of the saturated adsorption amount, and
   the first catalyst region is arranged on the upstream side of the exhaust gas flow channel for the exhaust gas with respect to the second catalyst region so that the exhaust gas contacts the first catalyst region and the second catalyst region in this order.

2. The exhaust gas purification apparatus for lean combustion engines according to claim 1, wherein a first catalyst carrier supporting the first catalyst region and the second catalyst region is zone-coated with at least the first catalyst region and the second catalyst region, and
   the first catalyst carrier is arranged in the exhaust gas flow channel so that the first catalyst region is located on the upstream side of the exhaust gas flow channel with respect to the second catalyst region.

3. The exhaust gas purification apparatus for lean combustion engines according to claim 1, wherein at least the first catalyst region is provided on a second catalyst carrier supporting the first catalyst region,

   at least the second catalyst region is provided on a third catalyst carrier supporting the second catalyst region, and
   the second catalyst carrier and the third catalyst carrier are arranged in the exhaust gas flow channel so that the first catalyst region is located on the upstream side of the exhaust gas flow channel with respect to the second catalyst region.

4. The exhaust gas purification apparatus for lean combustion engines according to claim 1, wherein the first catalyst region is provided on the second catalyst carrier supporting at least the first catalyst region,

   the first catalyst carrier supporting the first catalyst region and the second catalyst region is zone-coated with at least the first catalyst region and the second catalyst region, and
   the second catalyst carrier and the first catalyst carrier are arranged in the exhaust gas flow channel so that the first catalyst region is located on the upstream side of the exhaust gas flow channel with respect to the second catalyst region.

5. The exhaust gas purification apparatus for lean combustion engines according to claim 1, wherein the first catalyst carrier supporting the first catalyst region and the second catalyst region is zone-coated with at least the first catalyst region and the second catalyst region,

at least the second catalyst region is provided on the third catalyst carrier supporting the second catalyst region, and

the first catalyst carrier and the third catalyst carrier are arranged in the exhaust gas flow channel so that the first catalyst region is located on the upstream side of the exhaust gas flow channel with respect to the second catalyst region.

6. The exhaust gas purification apparatus for lean combustion engines according to any one of claims 1 to 5, wherein the catalyst carrier is one or more selected from the group consisting of a wall flow type catalyst carrier and a flow-through type catalyst carrier, and

the first catalyst region is provided on the wall flow type catalyst carrier.

7. The exhaust gas purification apparatus for lean combustion engines according to any one of claims 1 to 6, wherein the catalyst carrier is one or more selected from the group consisting of a wall flow type catalyst carrier and a flow-through type catalyst carrier, and

the first catalyst region is provided on the flow-through type catalyst carrier.

8. The exhaust gas purification apparatus for lean combustion engines according to any one of claims 1 to 7, wherein the catalyst carrier is one or more selected from the group consisting of a wall flow type catalyst carrier and a flow-through type catalyst carrier, and

the second catalyst region is provided on the wall flow type catalyst carrier.

9. The exhaust gas purification apparatus for lean combustion engines according to any one of claims 1 to 8, wherein the catalyst carrier is one or more selected from the group consisting of a wall flow type catalyst carrier and a flow-through type catalyst carrier, and

the second catalyst region is provided on the flow-through type catalyst carrier.

10. The exhaust gas purification apparatus for lean combustion engines according to any one of claims 1 to 9, further comprising one or more ammonia oxidation catalysts for oxidizing and removing ammonia on the downstream side of the exhaust gas flow channel of the selective reducing catalyst.

11. The exhaust gas purification apparatus for lean combustion engines according to any one of claims 1 to 10, further comprising a particulate filter which collects particulate components in the exhaust gas and combusts or oxidizes and removes the particulate components,

wherein the particulate filter, the first catalyst region and the second catalyst region are arranged in this order from the upstream side toward the downstream side of the exhaust gas flow channel.

12. The exhaust gas purification apparatus for lean combustion engines according to claim 11, wherein the particulate filter is a catalyst-coated particulate filter comprising at least an integral structure type carrier and a noble metal-containing catalyst layer provided on the integral structure type carrier.

13. The exhaust gas purification apparatus for lean combustion engines according to any one of claims 1 to 12, comprising a plurality of the oxidation catalysts,

wherein at least one of the oxidation catalysts is arranged on the upstream side of the exhaust gas flow channel with respect to the first catalyst region.

14. The exhaust gas purification apparatus for lean combustion engines according to any one of claims 1 to 13, comprising a plurality of the oxidation catalysts,

wherein at least one of the oxidation catalysts is arranged on the downstream side of the exhaust gas flow channel with respect to the first catalyst region.

15. The exhaust gas purification apparatus for lean combustion engines according to any one of claims 1 to 14, comprising a plurality of the oxidation catalysts,

wherein at least one of the oxidation catalysts is arranged on the downstream side of the exhaust gas flow channel with respect to the second catalyst region.

16. The exhaust gas purification apparatus for lean combustion engines according to any one of claims 1 to 15, wherein the oxygen storage and release material contains one or more selected from the group consisting of a ceria-based composite oxide and a ceria-zirconia-based composite oxide.

17. The exhaust gas purification apparatus for lean combustion engines according to any one of claims 1 to 16, wherein the zeolite is zeolite having an oxygen six-membered ring structure, an oxygen double six-membered ring structure, an oxygen eight-membered ring structure and/or an oxygen twelve-membered ring structure.

18. The exhaust gas purification apparatus for lean combustion engines according to any one of claims 1 to 17, wherein the zeolite is one or more selected from the group consisting of CHA, AEI, AFX, KFI, SFW, MFI and BEA.

19. The exhaust gas purification apparatus for lean combustion engines according to any one of claims 1 to 18, further comprising a heating device for heating the exhaust gas passing through the exhaust gas flow channel.

20. The exhaust gas purification apparatus for lean combustion engines according to any one of claims 1 to 19, further comprising a plasma generating apparatus for plasma-treating the exhaust gas passing through the exhaust gas flow channel.

**Patentansprüche**

1. Abgasreinigungsvorrichtung für Magerverbrennungsmotoren, umfassend mindestens: einen oder mehrere Oxidationskatalysatoren, die mindestens eines, ausgewählt aus der Gruppe, bestehend aus CO, HC, NO, und $NH_3$, in einem Abgas, abgegeben von einem Magerverbrennungsmotor, oxidieren; eine Reduktionsmittelzuführeinheit zum Zuführen eines oder mehrerer Reduktionsmittel, ausgewählt aus der Gruppe, bestehend aus einer Harnstoffkomponente und einer Ammoniakkomponente, in einen Abgasströmungskanal; und ein oder mehrere selektive Reduktionskatalysatoren, die Ammoniak adsorbieren und das Ammoniak mit $NO_x$ in Kontakt bringen, um eine Reduktion durchzuführen,

   wobei der eine oder die mehreren selektiven Reduktionskatalysatoren eine erste Katalysatorregion, die ein nicht-zeolithbasiertes Katalysatormaterial enthält, das mindestens ein Sauerstoffspeicher- und -freisetzungsmaterial und ein Übergangsmetallelement enthält, und eine zweite Katalysatorregion, die mindestens Zeolith und ein auf dem Zeolith gestütztes Übergangsmetallelement enthält, umfasst bzw. umfassen, wobei die erste Katalysatorregion mindestens ein Sauerstoffspeicher- und -freisetzungsmaterial und ein oder mehrere Übergangsmetallelemente, die aus der Gruppe, bestehend aus W, Nb und Ti, die auf der Oberfläche des Sauerstoffspeicher- und - freisetzungsmaterials gestützt sind, ausgewählt sind, enthält, und die zweite Katalysatorregion mindestens den Zeolith und ein oder mehrere, die aus der Gruppe, bestehend aus Cu, Fe, Ce, Mn, Ni, Co, Ca, Ag, Rh, Ru, Pd, Pt, Ir und Re, ausgewählt sind und auf dem Zeolith gestützt sind, enthält,
   die Maximalmenge an $NH_3$, die pro Volumeneinheit von der ersten Katalysatorregion adsorbiert wird, geringer als die Maximalmenge an $NH_3$ ist, die pro Volumeneinheit von der zweiten Katalysatorregion adsorbiert wird, unter einer Bedingung einer $NH_3$-Adsorption bei 33% der Sättigungsadsorptionsmenge, und
   die erste Katalysatorregion auf der stromaufwärtsgelegenen Seite des Abgasströmungskanals für das Abgas in Bezug auf die zweite Katalysatorregion angeordnet ist, so dass das Abgas mit der ersten Katalysatorregion und mit der zweiten Katalysatorregion in dieser Reihenfolge in Kontakt kommt.

2. Abgasreinigungsvorrichtung für Magerverbrennungsmotoren nach Anspruch 1, wobei ein erster Katalysatorträger die erste Katalysatorregion stützt und die zweite Katalysatorregion mit mindestens der ersten Katalysatorregion und der zweiten Katalysatorregion zonenbeschichtet ist, und
   der erste Katalysatorträger im Abgasströmungskanal angeordnet ist, so dass sich die erste Katalysatorregion auf der stromaufwärtsgelegenen Seite des Abgasströmungskanals in Bezug auf die zweite Katalysatorregion befindet.

3. Abgasreinigungsvorrichtung für Magerverbrennungsmotoren nach Anspruch 1, wobei mindestens die erste Katalysatorregion auf einem zweiten Katalysatorträger bereitgestellt ist, der die erste Katalysatorregion stützt,

   mindestens die zweite Katalysatorregion auf einem dritten Katalysatorträger bereitgestellt ist, der die zweite Katalysatorregion stützt, und
   der zweite Katalysatorträger und der dritte Katalysatorträger im Abgasströmungskanal angeordnet sind, so dass sich die erste Katalysatorregion auf der stromaufwärtsgelegenen Seite des Abgasströmungskanals in Bezug auf den zweiten Katalysatorbereich befindet.

4. Abgasreinigungsvorrichtung für Magerverbrennungsmotoren nach Anspruch 1, wobei die erste Katalysatorregion auf dem zweiten Katalysatorträger bereitgestellt ist, der mindestens die ersten Katalysatorregion stützt,

der erste Katalysatorträger, der die erste Katalysatorregion und die zweite Katalysatorregion stützt, mit mindestens der ersten Katalysatorregion und der zweiten Katalysatorregion zonenbeschichtet ist, und
der zweite Katalysatorträger und der erste Katalysatorträger im Abgasströmungskanal angeordnet sind, so dass sich der erste Katalysatorbereich auf der stromaufwärtsgelegenen Seite des Abgasströmungskanals in Bezug auf den zweiten Katalysatorbereich befindet.

5. Abgasreinigungsvorrichtung für Magerverbrennungsmotoren nach Anspruch 1, wobei der erste Katalysatorträger, der die erste Katalysatorregion und die zweite Katalysatorregion stützt, mindestens mit dem ersten Katalysatorbereich und dem zweiten Katalysatorbereich zonenbeschichtet ist,

   mindestens die zweite Katalysatorregion auf dem dritten Katalysatorträger bereitgestellt ist, der die zweite Katalysatorregion stützt, und
   der erste Katalysatorträger und der dritte Katalysatorträger im Abgasströmungskanal angeordnet sind, so dass sich der erste Katalysatorbereich auf der stromaufwärtsgelegenen Seite des Abgasströmungskanals in Bezug auf den zweiten Katalysatorbereich befindet.

6. Abgasreinigungsvorrichtung für Magerverbrennungsmotoren nach einem der Ansprüche 1 bis 5, wobei der Katalysatorträger einer oder mehrere, ausgewählt aus der Gruppe, bestehend aus einem Wandströmungstyp-Katalysatorträger und einem Durchflusstyp-Katalysatorträger, ist, und
   die erste Katalysatorregion auf dem Wandströmungstyp-Katalysatorträger bereitgestellt ist.

7. Abgasreinigungsvorrichtung für Magerverbrennungsmotoren nach einem der Ansprüche 1 bis 6, wobei der Katalysatorträger einer oder mehrere, ausgewählt aus der Gruppe, bestehend aus einem Wandströmungstyp-Katalysatorträger und einem Durchflusstyp-Katalysatorträger, ist, und
   die erste Katalysatorregion auf dem Durchflusstyp-Katalysatorträger bereitgestellt ist.

8. Abgasreinigungsvorrichtung für Magerverbrennungsmotoren nach einem der Ansprüche 1 bis 7, wobei der Katalysatorträger einer oder mehrere, ausgewählt aus der Gruppe, bestehend aus einem Wandströmungstyp-Katalysatorträger und einem Durchflusstyp-Katalysatorträger, ist, und
   die zweite Katalysatorregion auf dem Wandströmungstyp-Katalysatorträger bereitgestellt ist.

9. Abgasreinigungsvorrichtung für Magerverbrennungsmotoren nach einem der Ansprüche 1 bis 8, wobei der Katalysatorträger einer oder mehrere, ausgewählt aus der Gruppe, bestehend aus einem Wandströmungstyp-Katalysatorträger und einem Durchflusstyp-Katalysatorträger, ist, und
   die zweite Katalysatorrgion auf dem Durchflusstyp-Katalysatorträger bereitgestellt ist.

10. Abgasreinigungsvorrichtung für Magerverbrennungsmotoren nach einem der Ansprüche 1 bis 9, die weiter einen oder mehrere Ammoniak-Oxidationskatalysatoren zum Oxidieren und Entfernen von Ammoniak auf der stromabwärtsgelegenen Seite des Abgasströmungskanals des selektiven Reduktionskatalysators umfasst.

11. Abgasreinigungsvorrichtung für Magerverbrennungsmotoren nach einem der Ansprüche 1 bis 10, die weiter einen Partikelfilter umfasst, der Partikelkomponenten in dem Abgas auffängt und die Partikelkomponenten verbrennt oder oxidiert und entfernt,
    wobei der Partikelfilter, die erste Katalysatorregion und die zweite Katalysatorregion in dieser Reihenfolge von der stromaufwärtsgelegenen Seite zur stromabwärtsgelegen Seite des Abgasströmungskanals angeordnet sind.

12. Abgasreinigungsvorrichtung für Magerverbrennungsmotoren nach Anspruch 11, wobei der Partikelfilter ein katalysatorbeschichteter Partikelfilter ist, der mindestens einen Träger vom integralen Strukturtyp und eine edelmetallhaltige Katalysatorschicht umfasst, die auf dem Träger vom integralen Strukturtyp bereitgestellt ist.

13. Abgasreinigungsvorrichtung für Magerverbrennungsmotoren nach einem der Ansprüche 1 bis 12, die eine Vielzahl der Oxidationskatalysatoren umfasst,
    wobei mindestens einer der Oxidationskatalysatoren auf der stromaufwärtsgelegenen Seite des Abgasströmungskanals in Bezug auf die erste Katalysatorregion angeordnet ist.

14. Abgasreinigungsvorrichtung für Magerverbrennungsmotoren nach einem der Ansprüche 1 bis 13, die eine Vielzahl der Oxidationskatalysatoren umfasst,
    wobei mindestens einer der Oxidationskatalysatoren auf der stromabwärtsgelegen Seite des Abgasströmungskanals in Bezug auf die erste Katalysatorregion angeordnet ist.

15. Abgasreinigungsvorrichtung für Magerverbrennungsmotoren nach einem der Ansprüche 1 bis 14, die eine Vielzahl der Oxidationskatalysatoren umfasst,
wobei mindestens einer der Oxidationskatalysatoren auf der stromabwärtsgelegen Seite des Abgasströmungskanals in Bezug auf die zweite Katalysatoregion angeordnet ist.

16. Abgasreinigungsvorrichtung für Magerverbrennungsmotoren nach einem der Ansprüche 1 bis 15, wobei das Sauerstoffspeicher- und -freisetzungsmaterial eines oder mehrere, ausgewählt aus der Gruppe, bestehend aus einem ceroxidbasierten Verbundoxid und einem ceroxid-zirkoniumoxidbasierten Verbundoxid, enthält.

17. Abgasreinigungsvorrichtung für Magerverbrennungsmotoren nach einem der Ansprüche 1 bis 16, wobei der Zeolith ein Zeolith mit einer Sauerstoff-Sechsringstruktur, einer Sauerstoff-Doppelsechsringstruktur, einer Sauerstoff-Achtringstruktur und/oder einer Sauerstoff-Zwölfringstruktur ist.

18. Abgasreinigungsvorrichtung für Magerverbrennungsmotoren nach einem der Ansprüche 1 bis 17, wobei der Zeolith einer oder mehrere, ausgewählt aus der Gruppe, bestehend aus CHA, AEI, AFX, KFI, SFW, MFI und BEA, ist.

19. Abgasreinigungsvorrichtung für Magerverbrennungsmotoren nach einem der Ansprüche 1 bis 18, die weiter eine Heizvorrichtung zum Erhitzen des durch den Abgasströmungskanal strömenden Abgases umfasst.

20. Abgasreinigungsvorrichtung für Magerverbrennungsmotoren nach einem der Ansprüche 1 bis 19, die weiter eine Plasmaerzeugungsvorrichtung zur Plasmabehandlung des durch den Abgasströmungskanal strömenden Abgases umfasst.

## Revendications

1. Appareil de purification de gaz d'échappement pour moteurs à combustion pauvre, comprenant au moins : un ou plusieurs catalyseurs d'oxydation qui oxydent au moins un élément sélectionné parmi le groupe constitué de CO, HC, NO et $NH_3$ dans un gaz d'échappement évacué d'un moteur à combustion pauvre ; un module d'alimentation en agent réducteur pour alimenter un ou plusieurs agents réducteurs sélectionnés parmi le groupe constitué d'un composant d'urée et d'un composant d'ammoniac dans un canal d'écoulement de gaz d'échappement ; et un ou plusieurs catalyseurs à réduction sélective qui adsorbent l'ammoniac et amènent l'ammoniac en contact avec $No_x$ pour réaliser une réduction,

dans lequel le ou les catalyseurs à réduction sélective comprennent une première région de catalyseur contenant un matériau de catalyseur à base de non zéolithe contenant au moins un matériau de stockage et libération d'oxygène et un élément métallique de transition, et une seconde région de catalyseur contenant au moins de la zéolithe et un élément métallique de transition supporté sur la zéolithe, dans lequel la première région de catalyseur contient au moins le matériau de stockage et libération d'oxygène et un ou plusieurs éléments métalliques de transition sélectionnés parmi le groupe constitué de W, Nb et Ti supportés sur la surface du matériau de stockage et libération d'oxygène, et la seconde région de catalyseur contient au moins la zéolithe et un ou plusieurs éléments sélectionnés parmi le groupe constitué de Cu, Fe, Ce, Mn, Ni, Co, Ca, Ag, Rh, Ru, Pd, Pt, Ir et Re et supportés sur la zéolithe,
la quantité maximale de $NH_3$ adsorbée par volume unitaire de la première région de catalyseur est inférieure à la quantité maximale de $NH_3$ adsorbée par volume unitaire de la seconde région de catalyseur à une condition d'adsorption de $NH_3$ à 33 % de la quantité d'adsorption saturée, et
la première région de catalyseur est agencée sur le côté amont du canal d'écoulement de gaz d'échappement pour le gaz d'échappement par rapport à la seconde région de catalyseur de sorte que le gaz d'échappement vient en contact avec la première région de catalyseur et la seconde région de catalyseur dans cet ordre.

2. Appareil de purification de gaz d'échappement pour moteurs à combustion maigre selon la revendication 1, dans lequel un premier support de catalyseur supportant la première région de catalyseur et la seconde région de catalyseur subit un enrobage de zone avec au moins la première région de catalyseur et la seconde région de catalyseur, et
le premier support de catalyseur est agencé dans le canal d'écoulement de gaz d'échappement de sorte que la première région de catalyseur est située sur le côté amont du canal d'écoulement de gaz d'échappement par rapport à la seconde région de catalyseur.

3. Appareil de purification de gaz d'échappement pour moteurs à combustion maigre selon la revendication 1, dans lequel au moins la première région de catalyseur est prévue sur un deuxième support de catalyseur supportant la première région de catalyseur,

au moins la seconde région de catalyseur est prévue sur un troisième support de catalyseur supportant la seconde région de catalyseur, et
le deuxième support de catalyseur et le troisième support de catalyseur sont agencés dans le canal d'écoulement de gaz d'échappement de sorte que la première région de catalyseur est située sur le côté amont du canal d'écoulement de gaz d'échappement par rapport à la seconde région de catalyseur.

4. Appareil de purification de gaz d'échappement pour moteurs à combustion maigre selon la revendication 1, dans lequel la première région de catalyseur est prévue sur le deuxième support de catalyseur supportant au moins la première région de catalyseur,

le premier support de catalyseur supportant la première région de catalyseur et la seconde région de catalyseur subit un enrobage de zone avec au moins la première région de catalyseur et la seconde région de catalyseur, et
le deuxième support de catalyseur et le premier support de catalyseur sont agencés dans le canal d'écoulement de gaz d'échappement de sorte que la première région de catalyseur est située sur le côté amont du canal d'écoulement de gaz d'échappement par rapport à la seconde région de catalyseur.

5. Appareil de purification de gaz d'échappement pour moteurs à combustion maigre selon la revendication 1, dans lequel le premier support de catalyseur supportant la première région de catalyseur et la seconde région de catalyseur subit un enrobage de zone avec au moins la première région de catalyseur et la seconde région de catalyseur,

au moins la seconde région de catalyseur est prévue sur le troisième support de catalyseur supportant la seconde région de catalyseur, et
le premier support de catalyseur et le troisième support de catalyseur sont agencés dans le canal d'écoulement de gaz d'échappement de sorte que la première région de catalyseur est située sur le côté amont du canal d'écoulement de gaz d'échappement par rapport à la seconde région de catalyseur.

6. Appareil de purification de gaz d'échappement pour moteurs à combustion maigre selon l'une quelconque des revendications 1 à 5, dans lequel le support de catalyseur est un ou plusieurs sélectionnés parmi le groupe constitué d'un support de catalyseur de type à écoulement mural et un support de catalyseur de type à écoulement continu, et la première région de catalyseur est prévue sur le support de catalyseur de type à écoulement mural.

7. Appareil de purification de gaz d'échappement pour moteurs à combustion maigre selon l'une quelconque des revendications 1 à 6, dans lequel le support de catalyseur est un ou plusieurs sélectionnés parmi le groupe constitué d'un support de catalyseur de type à écoulement mural et un support de catalyseur de type à écoulement continu, et la première région de catalyseur est prévue sur le support de catalyseur de type à écoulement continu.

8. Appareil de purification de gaz d'échappement pour moteurs à combustion maigre selon l'une quelconque des revendications 1 à 7, dans lequel le support de catalyseur est un ou plusieurs sélectionnés parmi le groupe constitué d'un support de catalyseur de type à écoulement mural et un support de catalyseur de type à écoulement continu, et la seconde région de catalyseur est prévue sur le support de catalyseur de type à écoulement mural.

9. Appareil de purification de gaz d'échappement pour moteurs à combustion maigre selon l'une quelconque des revendications 1 à 8, dans lequel le support de catalyseur est un ou plusieurs sélectionnés parmi le groupe constitué d'un support de catalyseur de type à écoulement mural et un support de catalyseur de type à écoulement continu, et la seconde région de catalyseur est prévue sur le support de catalyseur de type à écoulement continu.

10. Appareil de purification de gaz d'échappement pour moteurs à combustion maigre selon l'une quelconque des revendications 1 à 9, comprenant en outre un ou plusieurs catalyseurs d'oxydation d'ammoniac pour oxyder et éliminer de l'ammoniac sur le côté aval du canal d'écoulement de gaz d'échappement du catalyseur à réduction sélective.

11. Appareil de purification de gaz d'échappement pour moteurs à combustion maigre selon l'une quelconque des revendications 1 à 10, comprenant en outre un filtre particulaire qui recueille des composants particulaires dans le gaz d'échappement et brûle ou oxyde et élimine les composants particulaires,

dans lequel le filtre particulaire, la première région de catalyseur et la seconde région de catalyseur sont agencés dans cet ordre du côté amont vers le côté aval du canal d'écoulement de gaz d'échappement.

12. Appareil de purification de gaz d'échappement pour moteurs à combustion maigre selon la revendication 11, dans lequel le filtre particulaire est un filtre particulaire enrobé de catalyseur comprenant au moins un support de type structure intégrale et une couche de catalyseur contenant un métal noble prévue sur le support de type structure intégrale.

13. Appareil de purification de gaz d'échappement pour moteurs à combustion maigre selon l'une quelconque des revendications 1 à 12, comprenant une pluralité des catalyseurs d'oxydation,

dans lequel au moins un des catalyseurs d'oxydation est agencé sur le côté amont du canal d'écoulement de gaz d'échappement par rapport à la première région de catalyseur.

14. Appareil de purification de gaz d'échappement pour moteurs à combustion maigre selon l'une quelconque des revendications 1 à 13, comprenant une pluralité des catalyseurs d'oxydation,

dans lequel au moins un des catalyseurs d'oxydation est agencé sur le côté aval du canal d'écoulement de gaz d'échappement par rapport à la première région de catalyseur.

15. Appareil de purification de gaz d'échappement pour moteurs à combustion maigre selon l'une quelconque des revendications 1 à 14, comprenant une pluralité des catalyseurs d'oxydation,

dans lequel au moins un des catalyseurs d'oxydation est agencé sur le côté aval du canal d'écoulement de gaz d'échappement par rapport à la seconde région de catalyseur.

16. Appareil de purification de gaz d'échappement pour moteurs à combustion maigre selon l'une quelconque des revendications 1 à 15, dans lequel le matériau de stockage et libération d'oxygène contient un ou plusieurs éléments sélectionnés parmi le groupe constitué d'un oxyde composite à base d'oxyde de cérium et d'un oxyde composite à base d'oxyde de cérium-zircone.

17. Appareil de purification de gaz d'échappement pour moteurs à combustion maigre selon l'une quelconque des revendications 1 à 16, dans lequel la zéolithe est de la zéolithe ayant une structure cyclique à six membres d'oxygène, une structure cyclique à six membres double d'oxygène, une structure cyclique à huit membres d'oxygène et/ou une structure cyclique à douze membres d'oxygène.

18. Appareil de purification de gaz d'échappement pour moteurs à combustion maigre selon l'une quelconque des revendications 1 à 17, dans lequel la zéolithe est un ou plusieurs éléments sélectionnés parmi le groupe constitué de CHA, AEI, AFX, KFI, SFW, MFI et BEA.

19. Appareil de purification de gaz d'échappement pour moteurs à combustion maigre selon l'une quelconque des revendications 1 à 18, comprenant en outre un dispositif de chauffage pour chauffer le gaz d'échappement passant à travers le canal d'écoulement de gaz d'échappement.

20. Appareil de purification de gaz d'échappement pour moteurs à combustion maigre selon l'une quelconque des revendications 1 à 19, comprenant en outre un appareil de génération de plasma pour traiter au plasma le gaz d'échappement passant à travers le canal d'écoulement de gaz d'échappement.

## Figure 1

## Figure 2

## Figure 3

## Figure 4

Gas Flow

DOC (Ox)  zDOC (Ox)  zDOC (Ox)  Heater  SCR₁oF (C-PF, C-DPF)  Heater  zSCR₁  zSCR₂  AMOX  zSCR  Red.  Pl.  100

## Figure 5

Gas Flow

C-PF(C-PF) (Ox, DOC)  Heater  zSCR₁  zSCR₂  zSCR  AMOX  AMOX  Red.  Pl.  100

## Figure 6

Gas Flow

DOC (Ox)  LNT (Ox)  Heater  SCR₁oF (C-PF, C-DPF)  SCR₂  AMOX  Red.  Pl.  100

**EP 3 892 837 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010021315 A
- JP 2015196115 A
- JP 2016195992 A
- JP 2012062818 A